(19) Europäisches Patentamt
European Patent Office
Office européen des brevets

(11) **EP 2 081 303 A2**

(12) **EUROPEAN PATENT APPLICATION**

(43) Date of publication:
22.07.2009 Bulletin 2009/30

(51) Int Cl.:
*H04B 7/155* (2006.01)    *H04L 27/26* (2006.01)

(21) Application number: 09150692.3

(22) Date of filing: 16.01.2009

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **17.01.2008 JP 2008008543**

(71) Applicant: **NTT DoCoMo, Inc.**
**Chiyoda-ku**
**Tokyo 100-6150 (JP)**

(72) Inventors:
• **Jaturong, Sangiamwong**
**TOKYO 100-6150 (JP)**
• **Asai, Takahiro**
**TOKYO 100-6150 (JP)**

(74) Representative: **Beder, Jens**
**Mitscherlich & Partner**
**Patent-und Rechtsanwälte**
**Sonnenstraße 33**
**80331 München (DE)**

(54) **Multicarrier radio communication system, base station, radio relay station, mobile station, and multicarrier radio communication method**

(57)    A multicarrier radio communication system includes a first mobile station located at a position where it is possible to directly communicate with the base station and to communicate with a radio relay station, and a second mobile station located at a position where it is impossible to directly communicate with the base station and it is possible to communicate with the radio relay station. For allocating subcarriers to signals, the base station determines an order of priority for signals destined for mobile stations on the basis of whether each mobile station is the first mobile station or not. The radio relay station allocates subcarriers to the signals, independently of subcarrier allocation made at the base station. For allocating subcarriers, the radio relay station determines an order of priority for signals on the basis of whether each mobile station is the first mobile station or not.

Fig. 1

**Description**

BACKGROUND OF THE INVENTION

1. Field of the Invention

The present invention relates to allocation of resources in radio relay techniques, and more specifically, to a multicarrier radio communication system, a base station, a radio relay station, a mobile station, and a multicarrier radio communication method in the system.

2. Description of the Related Art

Wideband radio communication schemes have been studied for realizing a radio communication system in which data is transmitted at a higher rate. For wideband signal transmission, the greater the fractional bandwidth, the more preferable, where the fractional bandwidth is the bandwidth divided by its center frequency. Accordingly, it is practical to use a higher frequency band for wideband signal transmission systems. However, when a higher frequency band is used, the received signal power is less due to attenuation of signals travelling a long distance between communication apparatuses. Especially, the received signal power is significantly weak in NLOS (Non-Line-Of-Sight) propagation environment. This makes difficult to ensure a large coverage area. As a solution of this problem, a radio relay technique has been noticed. In the radio relay technique, for example, in downlink, signals transmitted from a base station are received at a relay station which amplifies the signals, and then the amplified signals are forwarded to the destination mobile stations, so that the mobile stations receive signals with a higher power and the coverage area can be enhanced.

The relay station receives downlink signals from a base station and then forwards the received signals to destination mobile stations. The relay station also receives uplink signals from source mobile stations and then forwards the received signals to the base station. When the relay station simultaneously transmits and receives signals, irrespective of downlink and uplink, the relay station may receive a coupling wave transmitted from the relay station itself, which oscillates the reception circuit of the relay station and is detected as an interference (referred to as "loop interference"). Loop interference may make difficult to relay signals correctly. Accordingly, a radio relay method has been developed in which reception and transmission at a single relay station are conducted at different time periods (i.e., time slots) in order to prevent loop interference. This method is called "half-duplex relay".

In a radio relay system, if a mobile station is very far from a base station, the mobile station communicates with the base station via a relay station since the mobile station cannot directly communicate with the base station. On the other hand, if the distance from the mobile station to the base station is approximately in the same range to that from the mobile station to the relay station, the mobile station can directly communicate with the base station as well as the relay station. In this case, the mobile station can combine received signals from different stations (the base station and the relay station), thereby obtaining the cooperative diversity gain, which can improve quality of received signals or improve the system capacity. The method in which the base station transmits signals to a single mobile station, the relay station also receives and then forwards (relays) those signals to a single mobile station, is called "cooperative communication" or "cooperative transmission".

Irrespective of using the above-mentioned radio relay techniques, a plurality of waves having different delay times transmitted from a station comes to another station due to multipath propagation in radio communications. Those waves may result in frequency selective fading, which deteriorates quality of received signals. It is well known that applying a multicarrier communication scheme having a good multipath tolerance, such as OFDM (Orthogonal Frequency Division Multiplexing), is effective for this problem.

Furthermore, in accordance with OFDMA (Orthogonal Frequency Division Multiple Access), subcarriers are allocated to different users. OFDMA uses a resource allocation method for allocating different subcarriers of which the reception conditions are better to each user, thereby achieving the multiuser diversity gain. This results in improvement of the system capacity.

M. Kaneko and P. Popovski, "Adaptive Resource Allocation in Cellular OFDMA System with Multiple Relay Stations", Proc. 65th IEEE Vehicular Technology Conference (VTC Spring 2007), Dublin, Ireland, April, 2007 discloses a resource allocation method in a radio relay technique, in which the base station flexibly and effectively allocates resources in the base station and the relay station for attempting to improve the system capacity. More specifically, each of relay stations sends to the base station resource request information for a mobile station which communicates with the relay stations, and then the base station allocates resources at the base station on the basis of the resource request information reported from the relay stations.

On the other hand, M. Herdin, "A chunk based OFDM amplify-and-forward relaying scheme for 4G mobile radio systems," in Proceedings of the IEEE International Conference on Communications (ICC '06), June, 2006 discloses multicarrier communication scheme in which a base station, a relay station, and a mobile station are involved. In this scheme, data signals are sent from the base station to the relay station via subcarriers with better conditions therebetween, and the relay station reorders subcarriers in such a manner that subcarriers with better conditions between the relay station and the mobile station are used for transmitting the data signals to the mobile station. This results in improvement of quality of the received signal.

However, in the resource allocation methods in radio relay system using multicarrier communication described in the above documents, it is not considered whether the mobile station to which resources are allocated can perform cooperative communication or not. Accordingly, excessive resources may be allocated to a radio link to the mobile station which can improve reception characteristics by the cooperative diversity gain, so that the whole system may not have a sufficient capacity.

It is accordingly an object of the present invention to provide a multicarrier radio communication system, a base station, a radio relay station, and a multicarrier radio communication method by which suitable radio resources may be allocated to radio links to mobile stations.

It is another object of the present invention to provide a mobile station which can combine signals transmitted from the base station and the radio relay station for obtaining cooperative diversity gain even if the base station and the radio relay station use (at least sometime) different subcarrier sets for transmitting signals destined for the mobile station.

SUMMARY OF THE INVENTION

According to the present invention, there is provided a multicarrier radio communication system including a base station, a radio relay station having a radio relay function, a first mobile station located at a position where it is possible to directly communicate with the base station and to communicate with the radio relay station, and a second mobile station located at a position where it is impossible to directly communicate with the base station and it is possible to communicate with the radio relay station, the base station including: first subcarrier mapping means for allocating subcarriers to a plurality of signals destined for mobile stations on the basis of destinations of the signals, and for generating first subcarrier mapping information indicating allocation of subcarriers to signals at the first subcarrier mapping means, the first subcarrier mapping means determining an order of priority for signals destined for mobile stations in connection with the allocation of subcarriers on the basis of whether each mobile station is the first mobile station or the second mobile station; first subcarrier modulating means for modulating the signals onto the subcarriers in accordance with the allocation of subcarriers made at the first subcarrier mapping means; means for transmitting the signals modulated at the first subcarrier modulating means to the first mobile station and the radio relay station; and means for reporting the first subcarrier mapping information to the first mobile station and the radio relay station; the radio relay station including: means for receiving the signals transmitted from the base station; means for recognizing destinations of the received signals on the basis of the first subcarrier mapping information reported from the base station; second subcarrier mapping means for allocating subcarriers to the received signals destined for the mobile stations on the basis of the destinations of the signals, independently of the allocation of subcarriers made at the first subcarrier mapping means, and for generating second subcarrier mapping information indicating allocation of subcarriers to signals at the second subcarrier mapping means, the second subcarrier mapping means determining an order of priority for signals destined for mobile stations in connection with the allocation of subcarriers at the second subcarrier mapping means on the basis of whether each mobile station is the first mobile station or the second mobile station; means for transmitting the signals modulated onto subcarriers allocated at the second subcarrier mapping means to the first mobile station and the second mobile station; and means for reporting the second subcarrier mapping information to the first mobile station and the second mobile station; the first mobile station including: means for receiving the first subcarrier mapping information from the base station; means for receiving the second subcarrier mapping information from the radio relay station; means for receiving the signals from the base station and the radio relay station; and means for combining signals destined for the first mobile station among the received signals using the first subcarrier mapping information and the second subcarrier mapping information, thereby producing desired signals destined for the first mobile station; the second mobile station including: means for receiving the second subcarrier mapping information from the radio relay station; means for receiving the signals from the radio relay station; and means for detecting desired signals destined for the second mobile station among the received signals using the second subcarrier mapping information.

With such a structure, the first subcarrier mapping means of the base station determines an order of priority for signals destined for mobile stations in connection with the allocation of subcarriers on the basis of whether each mobile station is the first mobile station that can perform cooperative communication or the second mobile station that cannot perform cooperative communication. The second subcarrier mapping means of the radio relay station also determines an order of priority for signals destined for mobile stations in connection with the allocation of subcarriers on the basis of whether each mobile station is the first mobile station or the second mobile station. By virtue of determining the order of priority at each of the base station and the radio relay station, suitable radio resources (subcarriers) are allocated to mobile stations. Furthermore, on the basis of the first subcarrier mapping information and the second subcarrier mapping information sent from the base station and the radio relay station, the first mobile station can combine signals transmitted from the base station and the radio relay station for obtaining cooperative diversity gain even if the base station and the radio relay station use different subcarrier sets for transmitting signals destined for the mobile station.

In an embodiment of the system, the base station may further include means for retransmitting signals previously transmitted destined for the first mobile station, wherein the means for transmitting at the radio relay station transmits the signals modulated onto subcarriers allocated at the second subcarrier mapping means to the first mobile station and the second mobile station simultaneously with retransmission of the signals destined for the first mobile station from the base station, the signals transmitted from the radio relay station being originated from signals previously transmitted from the base station, wherein the first subcarrier mapping means allocates subcarriers to the signals retransmitted from the base station, independently of subcarriers allocated to the signals previously transmitted from the base station, wherein the means for receiving the signals in the first mobile station receives the signals previously transmitted from the base station, and thereafter receives the signals retransmitted from the base station simultaneously with the signals that are transmitted from the radio relay station and are originated from the signals previously transmitted from the base station, and wherein the first mobile station further including: means for multicarrier-demodulating the signals received from the base station and the radio relay station; and a memory for storing the multicarrier-demodulated signals, the stored multicarrier-demodulated signals corresponding to signals received from the base station in past, wherein, with the use of the first subcarrier mapping information and the second subcarrier mapping information, the means for combining signals in the first mobile station combines multicarrier-demodulated signals destined for the first mobile station and stored in the memory and multicarrier-demodulated signals destined for the first mobile station and currently supplied from the means for multicarrier-demodulating, the multicarrier-demodulated signals currently supplied corresponding to signals received from both of the base station and the radio relay station simultaneously.

In this embodiment, the first mobile station can combine signals from three branches including signals previously received from the base station and stored in the memory, signals currently received from the base station, and signals currently received from the radio relay station, with the use of the first subcarrier mapping information and the second subcarrier mapping information even if the three branches may use different subcarrier sets for signals destined for the single first mobile station.

Since the signals received from both of the base station and the radio relay station simultaneously may be modulated onto different subcarrier sets, there is likelihood that those signals interfere with each other. Preferably, the first mobile station further includes means for canceling interference affecting the multicarrier-demodulated signals destined for the first mobile station and currently supplied from the means for multicarrier-demodulating, wherein the means for combining signals combines multicarrier-demodulated signals destined for the first mobile station and stored in the memory and multicarrier-demodulated signals whose interference is cancelled by the means for canceling interference.

Preferably, the means for canceling interference generates replica signals from multicarrier-demodulated signals being stored in the memory, being related to multicarrier-demodulated signals not destined for the first mobile station, and being modulated onto subcarriers onto which the multicarrier-demodulated signals destined for the first mobile station and currently supplied from the means for multicarrier-demodulating, and wherein the means for canceling interference cancels the interference using the replica signals.

This is because the desired signals are interfered with undesired signals which are transmitted onto the same subcarriers of the desired signals. The transmission source of the desired signals is different from that of the undesired signals (If the source of the desired signals is the radio relay station, the source of the undesired signals is the base station, and vice versa). However, since the signals received from both of the base station and the radio relay station simultaneously are originated from the signals previously received from the base station, the mobile station can find signals related to the undesired signals from among the signals stored in the memory. Then, the means for canceling interference generates replica signals from the signals stored in the memory.

In another embodiment, the first subcarrier mapping means in the base station may allocate, to the signals retransmitted from the base station, subcarriers allocated by the radio relay station to the signals that are transmitted from the radio relay station and originated from signals previously transmitted from the base station. In this case, the base station and the radio relay station commonly use subcarriers for the signals, so that it is possible to prevent interference between the signals from the base station and the radio relay station.

In another aspect of the present invention, there is provided a base station that communicates with mobile stations and a radio relay station having a radio relay function, the mobile stations including a first mobile station located at a position where it is possible to directly communicate with the base station and to communicate with the radio relay station, and a second mobile station located at a position where it is impossible to directly communicate with the base station and it is possible to communicate with the radio relay station, the base station including: first subcarrier mapping means for allocating subcarriers to a plurality of signals destined for mobile stations on the basis of destinations of the signals, and for generating first subcarrier mapping information indicating allocation of subcarriers to signals at the first subcarrier mapping means, the first subcarrier mapping means determining an order of priority for signals destined for mobile stations in connection with the allocation of subcarriers on the basis of whether each mobile station is the first mobile station or the second mobile station; first subcarrier modulating means for modulating the signals onto the subcarriers in accordance with the allocation of subcarriers made at the first subcarrier mapping means; means for transmitting the signals modulated at the first subcarrier modulating means to the first mobile station and the radio relay station; and means for reporting the first subcarrier mapping information to the first mobile station and the radio relay station.

With such a structure, the first subcarrier mapping means of the base station determines an order of priority for signals destined for mobile stations in connection with the allocation of subcarriers on the basis of whether each mobile station is the first mobile station that can perform cooperative communication or the second mobile station that cannot perform cooperative communication. By virtue of determining the order of priority at the base station, suitable radio resources (subcarriers) are allocated to mobile stations.

The base station may further include means for determining whether or not each mobile station is the first mobile station or the second mobile station, wherein the first subcarrier mapping means refers to the determination as to whether or not each mobile station is the first mobile station or the second mobile station for determining the order of priority. The means for determining whether each mobile station is the first mobile station or not may facilitate determining the order of priority.

Preferably, the first subcarrier mapping means preferentially allocates, to signals destined for the mobile station determined to have higher priority by the first subcarrier mapping means, best subcarriers among a radio link from the base station, the radio link corresponding to the mobile station determined to have higher priority, and thereafter the first subcarrier mapping means allocates, to signals destined for the mobile station determined to have lower priority by the first subcarrier mapping means, remaining best subcarriers among another radio link from the base station, said another radio link corresponding to the mobile station determined to have lower priority. According to this scheme, the base station can give better communication quality to the mobile station determined to have higher priority.

Preferably, the first subcarrier mapping means gives higher priority to signals destined for the first mobile station than signals destined for the second mobile station. This means that the first subcarrier mapping means preferentially allocates to signals destined for the first mobile station, best subcarriers among the radio link between the base station and the first mobile station, and thereafter the first subcarrier mapping means allocates to signals destined for the second mobile station, remaining best subcarriers among the radio link between the base station and the radio relay station. Usually, the radio link between the base station and the mobile station is affected by frequency selective fading since it tends to be in NLOS (multipath) propagation environment. On the other hand, the radio link between the base station and the radio relay station is usually affected by frequency flat fading since it tends to be in LOS propagation environment, so that even if any subcarriers are selected for this radio link, the resulting communication quality for the second mobile station is not improved. Therefore, signals destined for the first mobile station is given higher priority.

The base station may further include means for retransmitting signals previously transmitted destined for the first mobile station in order that signals retransmitted from the base station be received at the first mobile station simultaneously with signals that are transmitted from the radio relay station and are originated from signals previously transmitted from the base station, wherein the first subcarrier mapping means allocates subcarriers to the signals retransmitted from the base station, independently of subcarriers allocated to the signals previously transmitted from the base station. In this embodiment, the first mobile station can combine signals from three branches including signals previously received from the base station, signals currently received from the base station, and signals currently received from the radio relay station.

Furthermore, the first subcarrier mapping means may allocate, to the signals retransmitted from the base station, subcarriers allocated by the radio relay station to the signals that are transmitted from the radio relay station and originated from signals previously transmitted from the base station. In this case, the base station and the radio relay station commonly use subcarriers for the signals, so that it is possible to prevent interference between the signals from the base station and the radio relay station.

In another embodiment, the first subcarrier mapping means may operate in a first allocation mode and a second allocation mode, the first subcarrier mapping means giving higher priority to signals destined for the second mobile station than signals destined for the first mobile station in connection with allocation of subcarriers in the first allocation mode, the first subcarrier mapping means giving higher priority to signals destined for the first mobile station than signals destined for the second mobile station in connection with allocation of subcarriers in the second allocation mode, the first subcarrier mapping means entering the second allocation mode from the first allocation mode once the signals destined for the first mobile station cannot be received successfully at the first mobile station, the first subcarrier mapping means entering the first allocation mode from the second allocation mode if a number of consecutive transmissions successfully received at the first mobile station exceeds a threshold. Accordingly, in an environment in which both of the radio link between the base station and the radio relay station and the radio link between the base station and the mobile station are affected by frequency selective fading, the first allocation mode can be ensured longer than the second allocation mode. In other words, the first subcarrier mapping means gives higher priority to the second mobile station

$MS_{NT}$ for a longer time in subcarrier allocation. It is advantageous since reception at the second mobile station relies on only the radio relay station whereas the first mobile station can combine received signals from the base station and the radio relay station.

In another aspect of the present invention, there is provided a radio relay station having a radio relay function and communicating with a base station and mobile stations, the mobile stations including a first mobile station located at a position where it is possible to directly communicate with the base station and to communicate with the radio relay station, and a second mobile station located at a position where it is impossible to directly communicate with the base station and it is possible to communicate with the radio relay station, the radio relay station including: means for receiving the signals transmitted from the base station; means for recognizing destinations of the received signals on the basis of the first subcarrier mapping information reported from the base station; second subcarrier mapping means for allocating subcarriers to the received signals destined for the mobile stations on the basis of the destinations of the signals, independently of the allocation of subcarriers made at the first subcarrier mapping means, and for generating second subcarrier mapping information indicating allocation of subcarriers to signals at the second subcarrier mapping means, the second subcarrier mapping means determining an order of priority for signals destined for mobile stations in connection with the allocation of subcarriers at the second subcarrier mapping means on the basis of whether each mobile station is the first mobile station or the second mobile station; means for transmitting the signals modulated onto subcarriers allocated at the second subcarrier mapping means to the first mobile station and the second mobile station; and means for reporting the second subcarrier mapping information to the first mobile station and the second mobile station.

With such a structure, the second subcarrier mapping means of the radio relay station determines an order of priority for signals destined for mobile stations in connection with the allocation of subcarriers on the basis of whether each mobile station is the first mobile station that can perform cooperative communication or the second mobile station that cannot perform cooperative communication. By virtue of determining the order of priority at the radio relay station, suitable radio resources (subcarriers) are allocated to mobile stations.

The radio relay station may further include means for determining whether or not each mobile station is the first mobile station or the second mobile station, wherein the second subcarrier mapping means refers to the determination as to whether or not each mobile station is the first mobile station or the second mobile station for determining the order of priority. The means for determining whether each mobile station is the first mobile station or not may facilitate determining the order of priority.

Preferably, the second subcarrier mapping means gives higher priority to signals destined for the second mobile station than signals destined for the first mobile station. This may improve the communication quality at the second mobile station of which reception relies on only the radio relay station, and accordingly, the area covered by the radio relay station can be ensured widely, in which a necessary quality level is achieved.

More specifically, the second subcarrier mapping means preferentially allocates, to signals destined for the second mobile station, best subcarriers among a radio link from the radio relay station to the second mobile station, and thereafter the second subcarrier mapping means allocates, to signals destined for the first mobile station, remaining best subcarriers among another radio link from the radio relay station to the first mobile station.

In another aspect of the present invention, there is provided a mobile station that communicates with a base station allocating subcarriers to a plurality of signals destined for mobile stations and transmitting the signals modulated onto the subcarriers, and a radio relay station having a radio relay function between the base station and the mobile station, allocating subcarriers to a plurality of signals destined for mobile stations, and transmitting the signals modulated onto the subcarriers, the mobile station including: means for receiving from the base station a first subcarrier mapping information indicating allocation of subcarriers to signals at the base station; means for receiving from the radio relay station a second subcarrier mapping information indicating allocation of subcarriers to signals at the radio relay station; means for receiving the signals from the base station and the radio relay station; and means for combining signals destined for the mobile station among the received signals using the first subcarrier mapping information and the second subcarrier mapping information, thereby producing desired signals destined for the mobile station.

With such a structure, on the basis of the first subcarrier mapping information and the second subcarrier mapping information sent from the base station and the radio relay station, the mobile station can combine signals transmitted from the base station and the radio relay station for obtaining cooperative diversity gain even if the base station and the radio relay station use different subcarrier sets for transmitting signals destined for the mobile station.

In an embodiment, the mobile station may further include: means for multicarrier-demodulating the signals received from the base station and the radio relay station; and a memory for storing the multicarrier-demodulated signals, the stored multicarrier-demodulated signals corresponding to signals received from the base station in past, wherein, with the use of the first subcarrier mapping information and the second subcarrier mapping information, the means for combining signals combines multicarrier-demodulated signals destined for the mobile station and stored in the memory and multicarrier-demodulated signals destined for the mobile station and currently supplied from the means for multicarrier-demodulating, the multicarrier-demodulated signals currently supplied corresponding to signals received from the radio relay station.

In this embodiment, the mobile station can combine signals from two branches including signals previously received from the base station and stored in the memory, signals currently received from the radio relay station, with the use of the first subcarrier mapping information and the second subcarrier mapping information even if the two branches may use different subcarrier sets for signals destined for the single first mobile station.

In an embodiment, the mobile station may further include: means for multicarrier-demodulating the signals received from the base station and the radio relay station; and a memory for storing the multicarrier-demodulated signals, the stored multicarrier-demodulated signals corresponding to signals received from the base station in past, wherein, with the use of the first subcarrier mapping information and the second subcarrier mapping information, the means for combining signals combines multicarrier-demodulated signals destined for the mobile station and stored in the memory and multicarrier-demodulated signals destined for the mobile station and currently supplied from the means for multicarrier-demodulating, the multicarrier-demodulated signals currently supplied corresponding to signals received from both of the base station and the radio relay station.

In this embodiment, the mobile station can combine signals from three branches including signals previously received from the base station and stored in the memory, signals currently received from the base station, and signals currently received from the radio relay station, with the use of the first subcarrier mapping information and the second subcarrier mapping information even if the three branches may use different subcarrier sets for signals destined for the single first mobile station.

Since the signals received from both of the base station and the radio relay station simultaneously may be modulated onto different subcarrier sets, there is likelihood that those signals interfere with each other. Preferably, the mobile station further includes means for canceling interference affecting the multicarrier-demodulated signals destined for the mobile station and currently supplied from the means for multicarrier-demodulating, wherein the means for combining signals combines multicarrier-demodulated signals destined for the mobile station and stored in the memory and multicarrier-demodulated signals whose interference is cancelled by the means for canceling interference.

Preferably, the means for canceling interference generates replica signals from multicarrier-demodulated signals being stored in the memory, being related to multicarrier-demodulated signals not destined for the mobile station, and being modulated onto subcarriers onto which the multicarrier-demodulated signals destined for the mobile station and currently supplied from the means for multicarrier-demodulating, and wherein the means for canceling interference cancels the interference using the replica signals.

This is because the desired signals are interfered with undesired signals which are transmitted onto the same subcarriers of the desired signals. The transmission source of the desired signals is different from that of the undesired signals (If the source of the desired signals is the radio relay station, the source of the undesired signals is the base station, and vice versa). However, since the signals received from both of the base station and the radio relay station simultaneously are originated from the signals previously received from the base station, the mobile station can find signals related to the undesired signals from among the signals stored in the memory. Then, the means for canceling interference generates replica signals from the signals stored in the memory.

In another aspect of the present invention, there is provided a multicarrier radio communication method in a multicarrier radio communication system including a base station, a radio relay station having a radio relay function, a first mobile station located at a position where it is possible to directly communicate with the base station and to communicate with the radio relay station, and a second mobile station located at a position where it is impossible to directly communicate with the base station and it is possible to communicate with the radio relay station, the base station executing the steps of: determining an order of priority for signals destined for mobile stations in connection with allocation of subcarriers at the base station on the basis of whether each mobile station is the first mobile station or the second mobile station; allocating subcarriers to a plurality of signals destined for mobile stations on the basis of destinations of the signals and the allocation of subcarriers at the base station; generating first subcarrier mapping information indicating allocation of subcarriers to signals at the base station; modulating the signals onto the subcarriers in accordance with the allocation of subcarriers made at the allocating step; transmitting the signals modulated at modulating step to the first mobile station and the radio relay station; and reporting the first subcarrier mapping information to the first mobile station and the radio relay station; the radio relay station executing the steps of: receiving the signals transmitted from the base station; recognizing destinations of the received signals on the basis of the first subcarrier mapping information reported from the base station; determining an order of priority for signals destined for mobile stations in connection with allocation of subcarriers at the radio relay station on the basis of whether each mobile station is the first mobile station or the second mobile station; allocating subcarriers to the received signals destined for the mobile stations on the basis of the destinations of the signals and the allocation of subcarriers at the radio relay station, independently of the allocation of subcarriers made at the base station; generating second subcarrier mapping information indicating allocation of subcarriers to signals at the radio relay station; transmitting the signals modulated onto subcarriers allocated at the radio relay station to the first mobile station and the second mobile station; and reporting the second subcarrier mapping information to the first mobile station and the second mobile station; the first mobile station executing the steps of: receiving the first subcarrier mapping information from the base station; receiving the second subcarrier mapping information from the radio relay station; receiving the signals from the base station and the radio relay station; and combining signals destined for the first mobile station among the received signals using the first subcarrier mapping information and the second subcarrier mapping information, thereby producing desired signals destined for the first mobile station; the second mobile station executing the steps of; receiving the second subcarrier mapping information from the radio relay station; receiving the signals from the radio relay station; and detecting desired signals destined for the second mobile station among the received signals using the second subcarrier mapping information.

In a further aspect of the present invention, there is provided a multicarrier radio communication system including a base station, a radio relay station having a radio relay function, a first mobile station located at a position where it is possible to directly communicate with the base station and to communicate with the radio relay station, and a second mobile station located at a position where it is impossible to directly communicate with the base station and it is possible to communicate with the radio relay station, the base station including: first subcarrier mapping means for allocating subcarriers to a plurality of signals that are transmitted from the radio relay station and are originated from mobile stations on the basis of originations of the signals, and for generating first subcarrier mapping information indicating allocation of subcarriers to signals at the first subcarrier mapping means, the first subcarrier mapping means determining an order of priority for signals originated from mobile stations in connection with the allocation of subcarriers on the basis of whether each mobile station is the first mobile station or the second mobile station; means for reporting the first subcarrier mapping information to the radio relay station, so that the radio relay station recognizes subcarriers that should be used for transmitting signals originated from the respective mobile stations to the base station; and means for receiving signals from the radio relay station and the first mobile station, the radio relay station including: second subcarrier mapping means for allocating subcarriers to signals originated from the mobile stations on the basis of the originations of the signals, independently of the allocation of subcarriers made at the first subcarrier mapping means, and for generating second subcarrier mapping information indicating allocation of subcarriers to signals at the second subcarrier mapping means, the second subcarrier mapping means determining an order of priority for signals originated from mobile stations in connection with the allocation of subcarriers at the second subcarrier mapping means on the basis of whether each mobile station is the first mobile station or the second mobile station; means for reporting the second subcarrier mapping information to the first mobile station and the second mobile station, so that each mobile station recognizes subcarriers that should be used for transmitting signals at the mobile station; means for reporting the second subcarrier mapping information to the base station, so that the base station recognizes subcarriers used by respective mobile stations; means for receiving the signals transmitted from the first and second mobile stations; means for recognizing originations of signals received at the means for receiving on the basis of the second subcarrier mapping information made at the second subcarrier mapping means; means for receiving the first subcarrier mapping information from the base station; and means for transmitting the signals modulated onto subcarriers in accordance with the allocation of subcarriers indicated in the first subcarrier mapping information to the base station, each of the first and second mobile stations including: means for receiving the second subcarrier mapping information from the radio relay station; subcarrier modulating means for modulating signals destined for the base station onto the subcarriers in accordance with the allocation of subcarriers indicated in the second subcarrier mapping information; and means for transmitting the signals modulated at the subcarrier modulating means, wherein the base station further including: means for combining signals that are originated from the first mobile station and received from the radio relay station with signals that are originated from the first mobile station and received from the first mobile station using the first subcarrier mapping information and the second subcarrier mapping information, thereby producing signals originated from the first mobile station; and means for detecting signals originated from the second mobile station among the signals received from the radio relay station using the second subcarrier mapping information.

With such a structure, the first subcarrier mapping means of the base station determines an order of priority for signals originated from mobile stations in connection with the allocation of subcarriers on the basis of whether each mobile station is the first mobile station that can perform cooperative communication or the second mobile station that cannot perform cooperative communication. The second subcarrier mapping means of the radio relay station also determines an order of priority for signals originated from mobile stations in connection with the allocation of subcarriers on the basis of whether each mobile station is the first mobile station or the second mobile station. By virtue of determining the order of priority at each of the base station and the radio relay station, suitable radio resources (subcarriers) are allocated to mobile stations. Furthermore, on the basis of the first subcarrier mapping information made at the base station and the second subcarrier mapping information sent from the radio relay station, the base station can combine signals transmitted from the first mobile station and the radio relay station for obtaining cooperative diversity gain even if the first mobile station and the radio relay station use different subcarrier sets for transmitting signals originated from the single mobile station.

In an embodiment of the system, the first mobile station further including means for retransmitting signals previously transmitted destined for the base station, wherein the means for transmitting at the radio relay station transmits the signals in accordance with the allocation of subcarriers indicated in the first subcarrier mapping information to the base station simultaneously with retransmission of the signals at the means for retransmitting of the first mobile station, the signals transmitted from the radio relay station being originated from signals previously transmitted from the first mobile station, wherein the means for receiving signals in the base station receives the signals previously transmitted from the base station, and thereafter receives the signals retransmitted from the first mobile station simultaneously with the signals that are transmitted from the radio relay station and are originated from the signals previously transmitted from the first mobile station, wherein the base station further including: third subcarrier mapping means for allocating subcarriers to the signals retransmitted from the first mobile station, independently of subcarriers allocated to the signals previously transmitted from the first mobile station, and for generating third subcarrier mapping information indicating allocation of subcarriers to the signals retransmitted from the first mobile station; means for reporting the third subcarrier mapping information to the first mobile station, so that the first mobile station recognizes subcarriers that should be used for retransmitting the signals; means for multicarrier-demodulating the signals received from the first mobile station and the radio relay station; and a memory for storing the multicarrier-demodulated signals, the stored multicarrier-demodulated signals corresponding to signals received from the first mobile station in past, and wherein, with the use of the first subcarrier mapping information, the second subcarrier mapping information, and the third subcarrier mapping information, the means for combining signals in the base station combines multicarrier-demodulated signals received from the first mobile station and stored in the memory and multicarrier-demodulated signals currently supplied from the means for multicarrier-demodulating, the multicarrier-demodulated signals currently supplied corresponding to signals received from both of the first mobile station and the radio relay station simultaneously.

In this embodiment, the base station can combine signals from three branches including signals previously received from the first mobile station and stored in the memory, signals currently received from the first mobile station, and signals currently received from the radio relay station, with the use of the first subcarrier mapping information, the second subcarrier mapping information, and the third subcarrier mapping information even if the three branches may use different subcarrier sets for signals originated from the single first mobile station.

BRIEF DESCRIPTION OF THE DRAWINGS

Fig. 1 is a view showing a radio relay system according to an embodiment of the present invention;
Fig. 2 is a diagram showing functional elements of a base station according to the embodiment of the present invention;
Fig. 3 is a diagram showing functional elements of a radio relay station according to the embodiment of the present invention;
Fig. 4 is a diagram showing functional elements of each mobile station according to the embodiment of the present invention;
Fig. 5 is a diagram showing functional elements of a signal detector in each mobile station that does not cancel interference according to the embodiment of the present invention;
Fig. 6A is a diagram showing a communication status at a time slot [$2i$-1] according to the first embodiment of the present invention;
Fig. 6B is a diagram showing allocation of subcarriers at the base station at the communication status shown in Fig. 6A;
Fig. 7A is a diagram showing a communication status at another time slot [$2i$] according to the first embodiment of the present invention;
Fig. 7B is a diagram showing allocation of subcarriers at the radio relay station at the communication status shown in Fig. 7A;
Fig. 8 is a diagram showing combining of received signals at a time slot [$2i$] at the mobile station that can perform cooperative communication according to the first embodiment of the present invention;
Figs. 9A and 9B form a flowchart showing operations of the radio communication method in which radio resources are allocated in accordance with the first embodiment of the present invention;
Fig. 10 is a diagram showing functional elements of a signal detector in each mobile station that cancels interference according to a second embodiment of the present invention;
Fig. 11A is a diagram showing a communication status at a time slot [$2i$] according to the second embodiment of the present invention;
Fig. 11B is a diagram showing allocation of subcarriers at the base station at the communication status shown in Fig. 11A;
Fig. 11C is a diagram showing allocation of subcarriers at the radio relay station at the communication status shown in Fig. 11A;
Fig. 12 is a diagram showing combining of received signals at time slot [$2i$] at the mobile station that can perform cooperative communication according to the second embodiment of the present invention;
Figs. 13A and 13B form a flowchart showing operations of the radio communication method in which radio resources are allocated in accordance with the second embodiment of the present invention and in which the mobile station does not cancel interference;

Figs. 14A and 14B form a flowchart showing operations of the radio communication method in which radio resources are allocated in accordance with the second embodiment of the present invention and in which the mobile station cancels interference;

Fig. 15A is a diagram showing allocation of subcarriers at the radio relay station at a time slot [2$i$] in accordance with a third embodiment of the present invention;

Fig. 15B is a diagram showing allocation of subcarriers at the base station at time slot [2$i$] in accordance with the third embodiment of the present invention;

Fig. 16 is a diagram showing combining of received signals at time slot [2$i$] at the mobile station that can perform cooperative communication according to the third embodiment of the present invention;

Figs. 17A and 17B form a flowchart showing operations of the radio communication method in which radio resources are allocated in accordance with the third embodiment of the present invention;

Fig. 18A is a diagram showing a communication status at a time slot [2$i$-1] according to a fourth embodiment of the present invention;

Fig. 18B is a diagram showing allocation of subcarriers at the base station at the communication status shown in Fig. 18A;

Fig. 19 is a a flowchart showing operations of the radio communication method in which radio resources are allocated in accordance with the fourth embodiment of the present invention; and

Fig. 20 is a view showing a radio relay system according to a modified embodiment of the present invention.

## DETAILED DESCRIPTION OF THE PREFERRED EMBODIMENTS

Various embodiments of the present invention will be described below in detail with reference to the accompanying drawings. Identical or like elements are denoted by the same or like reference characters, and redundant descriptions will be avoided. It should be noted that the drawings are in simplified form and are not to precise scale.

## FIRST EMBODIMENT

## RADIO COMMUNICATION SYSTEM

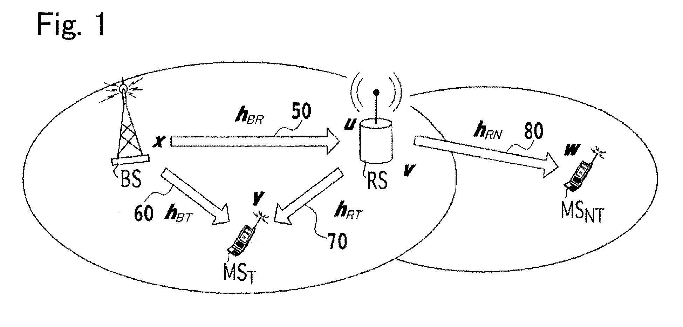

Fig. 1 is a view showing the overall structure of a multicarrier radio communication system (radio relay system), especially showing parts of the radio relay system which pertains to the present invention. In the embodiment, the present invention is applied to downlink communications.

As shown in Fig. 1, the radio relay system includes a base station (radio communication apparatus) BS, a radio relay station (radio relay apparatus) RS having a radio relay function. The radio relay system further includes a first mobile station $MS_T$ (radio communication apparatus) located at a position where it is possible to directly communicate with the base station and to communicate with the radio relay station, so that the first mobile station $MS_T$ can perform cooperative communication. The radio relay system further includes a second mobile station (radio communication apparatus) $MS_{NT}$ located at a position where it is impossible to directly communicate with the base station and it is possible to communicate with the radio relay station, so that the second mobile station $MS_{NT}$ cannot perform cooperative communication.

In this system, the base station BS and the radio relay station RS are connected via a radio link 50 having a channel characteristic (e.g., channel transfer function) $\boldsymbol{h}_{BR}$. The base station BS and the mobile station $MS_T$ are connected via a radio link 60 having a channel characteristic $\boldsymbol{h}_{BT}$. The radio relay station RS and the mobile station $MS_T$ are connected via a radio link 70 having a channel characteristic $\boldsymbol{h}_{RT}$. The radio relay station RS and the mobile station $MS_{NT}$ are connected via a radio link 80 having a channel characteristic $\boldsymbol{h}_{RN}$. Each channel characteristic is expressed in a vector form consisting of gain levels at frequencies (subcarriers), and thus is denoted in bold face.

In the system, time slots used for transmission from the base station BS (and for reception by the radio relay station RS) are different from time slots used for transmission from the radio relay station RS for half-duplex relay.

The first mobile station $MS_T$ can directly communicate with the base station and communicate with the radio relay station. The second mobile station $MS_{NT}$ cannot directly communicate with the base station, but can communicate with the radio relay station. Each mobile station recognizes whether or not the mobile station itself is receiving downlink signals directly from the base station. If a mobile station recognizes that the mobile station itself is receiving downlink signals from both of the base station BS and the radio relay station RS, the mobile station transmits an uplink (a feedback) signal indicating that the mobile station itself can perform cooperative communication. This uplink (feedback) signal is received by the base station BS and the radio relay station RS, and therefore, the base station BS and the radio relay station RS can determine that the mobile station can perform cooperative communication (the mobile station is the first mobile station $MS_T$). If a mobile station recognizes that the mobile station itself is receiving downlink signals directly from only the radio relay station RS, the mobile station transmits an uplink (a feedback) signal indicating that the mobile station cannot perform cooperative communication. This uplink (feedback) signal is received by the radio relay station RS and then forwarded to the base station BS, and therefore, the base station BS and the radio relay station RS can determine that the mobile station cannot perform cooperative communication (the mobile station is the second mobile station $MS_{N\,T}$).

BASE STATION BS

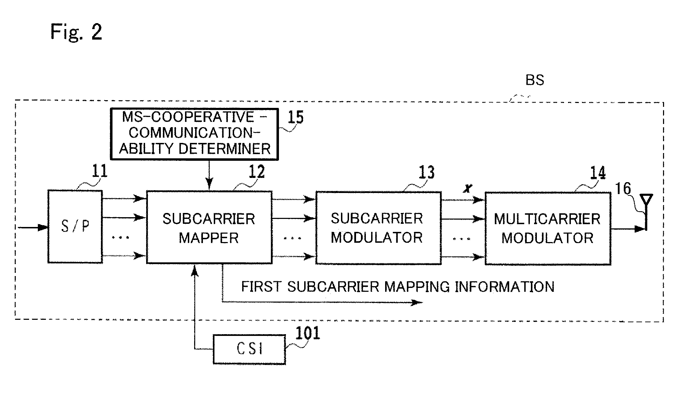

Fig. 2 is a diagram showing functional elements of the base station BS (radio transmission apparatus) according to the embodiment. As shown in Fig. 2, the base station BS includes an S/P (serial-to-parallel) converter 11, a subcarrier mapper 12, a subcarrier modulator 13, a multicarrier modulator 14, a mobile-station-cooperative-communication-ability determiner (MS-cooperative-communication-ability determiner) 15, and an antenna 16.

The S/P converter 11 converts an input serial signal sequence to be transmitted to a plurality of mobile stations into a plurality of parallel signal sequences. The number of parallel sequences is equal to or less than that of subcarriers used in multicarrier modulation to be executed at a later stage. The parallel sequences output from the S/P converter 11 can be discriminated into first parallel sequences destined for the first mobile station $MS_T$ and second parallel sequences destined for the second mobile station $MS_{NT}$.

The MS-cooperative-communication-ability determiner 15 determinates as to whether the individual mobile stations to which the parallel sequences should be sent can perform cooperative communication or not, on the basis of the above-mentioned signal sent from respective mobile stations. In other words, the MS-cooperative-communication-ability determiner 15 determines as to whether each destination mobile station is the first mobile station $MS_N$ or the second mobile station $MS_{N\,T}$ shown in Fig. 1.

On the basis of the determination at the MS-cooperative-communication-ability determiner 15, the subcarrier mapper 12 determines an order of priority for the mobile station $MS_T$ and the mobile station $MS_{NT}$ in connection with subcarrier allocation. More specifically, in this embodiment, the subcarrier mapper 12 gives higher priority to the first mobile station $MS_T$ than the second mobile station $MS_{NT}$: the subcarrier mapper 12 first allocates subcarriers to the first parallel signals destined for the first mobile station $MS_T$, and thereafter allocates subcarriers to the second parallel signals destined for the second mobile station $MS_{NT}$.

The subcarrier mapper 12 refers to channel state information (CSI) 101 indicating a channel state (channel condition) between the base station BS and the relay station RS and a channel state (channel condition) between the base station BS and the mobile station $MS_T$ that can perform cooperative communication. Each of the channel state means the communication state (communication quality) which is affected by fading or other impairments. More specifically, each of the channel state indicates gain levels at frequencies (subcarriers) at the receiver, or the transfer function. The above-mentioned channel characteristics are the channel states described here. The CSI 101 about the channel state between the base station BS and the relay station RS is prepared by the radio relay station RS and reported to the base station BS. The CSI 101 about the channel state between the base station BS and the mobile station $MS_T$ is prepared by the mobile station $MS_T$ and reported to the base station BS.

On the basis of the CSI 101 and the destinations of the parallel signals, the subcarrier mapper 12 determines allocation (mapping) of subcarriers to the mobile stations. In other words, the subcarrier mapper 12 allocates different subcarriers to the parallel signals destined for the first and second mobile stations.

The subcarrier mapper 12 permutates the parallel signals supplied from the S/P converter 11 on the basis of the allocation of subcarriers at the subcarrier mapper 12, whereby the subcarrier mapper 12 adapts the parallel signals to appropriate subcarriers which will be applied at the subcarrier modulator 13 in accordance with the allocation of subcarriers made at the subcarrier mapper 12.

The subcarrier mapper 12 generates first subcarrier mapping information indicating the allocation of subcarriers to the respective signals at the subcarrier mapper 12. The subcarrier mapper 12 reports the first subcarrier mapping information to the relay station and the mobile stations. The scheme for transmitting the first subcarrier mapping information is not limited, but for example, the subcarrier mapper 12 may allocate dedicated subcarriers to the first subcarrier mapping information and may supply the first subcarrier mapping information to the subcarrier modulator 13, so that the antenna 16 can transmit the first subcarrier mapping information contained in some of the parallel signals.

The subcarrier modulator 13 modulates the parallel signals permutated at the subcarrier mapper 12 onto the allocated subcarriers, respectively, in accordance with the allocation of subcarriers made at the subcarrier mapper 12, thereby forming a plurality of subcarrier-modulated signals. The modulation at the subcarrier modulator 13 may be, e.g., QPSK (Quadrature Phase Shift Keying) modulation.

The multicarrier modulator 14 executes multicarrier modulation on the parallel subcarrier-modulated signals supplied from the subcarrier modulator 13, and multiplexes the signals to form a first composite sequence. If multicarrier modulation is performed in accordance with OFDM, the multicarrier modulator 14 performs multicarrier modulation using the inverse Fourier transform to form the serial first composite sequence which is multicarrier-modulated. The multicarrier modulator 14 supplies the first composite sequence to the antenna 16, so that the first composite sequence is transmitted by air.

RADIO RELAY STATION RS

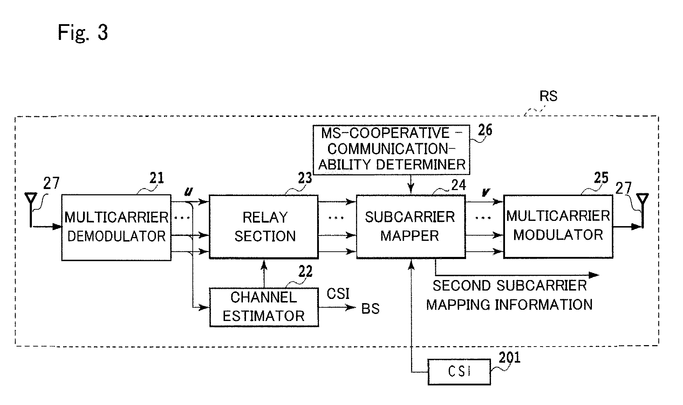

Fig. 3 is a diagram showing functional elements of the radio relay station RS (radio relay apparatus) according to the embodiment. As shown in Fig. 3, the radio relay station RS includes a multicarrier demodulator 21, a channel estimator 22, a relay section 23, a subcarrier mapper 24, a multicarrier modulator 25, a mobile-station-cooperative-communication-ability determiner (MS- cooperative-communication-ability determiner) 26, and an antenna 27.

The multicarrier demodulator 21 multicarrier-demodulates a received signal (the first composite sequence) received by the antenna 27, so as to demultiplex the received signal into a plurality of parallel signals corresponding to the subcarriers. If multicarrier modulation is performed in accordance with OFDM, the multicarrier demodulator 21 performs multicarrier demultiplexing and demodulation using the Fourier transform, so as to form the parallel signals corresponding to the subcarriers.

The MS-cooperative-communication-ability determiner 26 determinates as to whether the individual mobile stations to which the parallel signals should be sent can perform cooperative communication or not, on the basis of the above-mentioned signal sent from respective mobile stations. In other words, the MS-cooperative-communication-ability determiner 26 determines as to whether each destination mobile station is the first mobile station $MS_N$ or the second mobile station $MS_{N\,T}$ shown in Fig. 1.

The channel estimator 22 estimates communication states at the respective subcarriers (frequencies) using the parallel signals supplied from the multicarrier demodulator 21, and produces the CSI (channel state information). The CSI is transmitted (fed back) to the base station BS.

The relay section 23 executes a process on the parallel signals supplied from the channel estimator 22, using the channel state information about the channel state between the base station BS and the radio relay station RS produced at the channel estimator 22. This process is multiplying the parallel signals by the inverse transfer function which is the inverse of the transfer function between the base station BS and the radio relay station RS estimated at the channel estimator 22, as will be described in more detail. In this specification, this process is called ZF (Zero Forcing). By virtue of this process, powers of the parallel signals may be equalized over the whole subcarriers.

On the basis of the determination at the MS-cooperative-communication-ability determiner 26, the subcarrier mapper 24 determines an order of priority for destination mobile stations in connection with subcarrier mapping on the basis of whether the individual mobile station is the first mobile station $MS_T$ or the second mobile station $MS_{NT}$. More specifically, in this embodiment, the subcarrier mapper 24 gives higher priority to the second mobile station $MS_{NT}$ than the first mobile station $MS_T$: the subcarrier mapper 24 first allocates subcarriers to the parallel signals destined for the second mobile station $MS_{NT}$, and thereafter allocates subcarriers to the parallel signals destined for the first mobile station $MS_T$.

The subcarrier mapper 24 refers to channel state information (CSI) 201 indicating a channel state (channel condition) between the radio relay station RS and the mobile station $MS_{NT}$ which cannot perform cooperative communication and a channel state (channel condition) between the radio relay station RS and the mobile station $MS_T$ that can perform cooperative communication. The CSI 201 about the channel state between the radio relay station RS and the mobile station $MS_{NT}$ is prepared by the mobile station $MS_{NT}$ and reported to the radio relay station RS. The CSI 201 about the channel state between the radio relay station RS and the mobile station $MS_T$ is prepared by the mobile station $MS_T$ and reported to the radio relay station RS.

On the basis of the CSI 201 and the destinations of the parallel signals, the subcarrier mapper 24 determines allocation (mapping) of subcarriers to the mobile stations. In other words, the subcarrier mapper 24 allocates different subcarriers to the parallel signals which are supplied from the relay section 23 and are destined for the first and second mobile stations. It should be noted that the radio relay station RS receives the first subcarrier mapping information, so that the subcarrier mapper 24 recognizes the destination mobile station of each signal supplied from the relay section 23 by, for example, demodulating the subcarriers dedicated to the first subcarrier mapping information.

The subcarrier mapper 24 permutates the parallel signals supplied from the relay section 23 on the basis of the allocation of subcarriers at the subcarrier mapper 24, whereby the subcarrier mapper 24 adapts the parallel signals to appropriate subcarriers in accordance with the allocation of subcarriers made at the subcarrier mapper 24.

The subcarrier mapper 24 generates second subcarrier mapping information indicating the allocation of subcarriers to the respective signals at the subcarrier mapper 24. The subcarrier mapper 24 reports the second subcarrier mapping information to the mobile stations. The scheme for transmitting the second subcarrier mapping information is not limited, but for example, the subcarrier mapper 24 may allocate dedicated subcarriers to the second subcarrier mapping information, so that the antenna 27 can transmit the second subcarrier mapping information contained in some of the parallel signals.

The multicarrier modulator 25 executes multicarrier modulation on the parallel signals supplied from the subcarrier mapper 24, and multiplexes the signals to form a second composite sequence. If multicarrier modulation is performed in accordance with OFDM, the multicarrier modulator 25 performs multicarrier modulation using the inverse Fourier transform to form the serial second composite sequence which is multicarrier-modulated. The multicarrier modulator 25 supplies the second composite sequence to the antenna 27, so that the second composite sequence is transmitted by air.

In the radio relay station RS, the multicarrier demodulator 21 executes the Fourier transform, the subcarrier mapper 24 permutates (reorders) the parallel signals, and the multicarrier modulator 25 executes the inverse Fourier transform. As a result, as similar to the disclosure of the above-mentioned document, "A chunk based OFDM amplify-and-forward relaying scheme for 4G mobile radio systems", the parallel signals to be transmitted are modulated onto subcarriers allocated at the radio relay station RS, independently of subcarrier allocation at the base station BS although the radio relay station RS does not execute subcarrier-demodulation or subcarrier-modulation.

MOBILE STATIONS $MS_{NT}$ AND $MS_T$

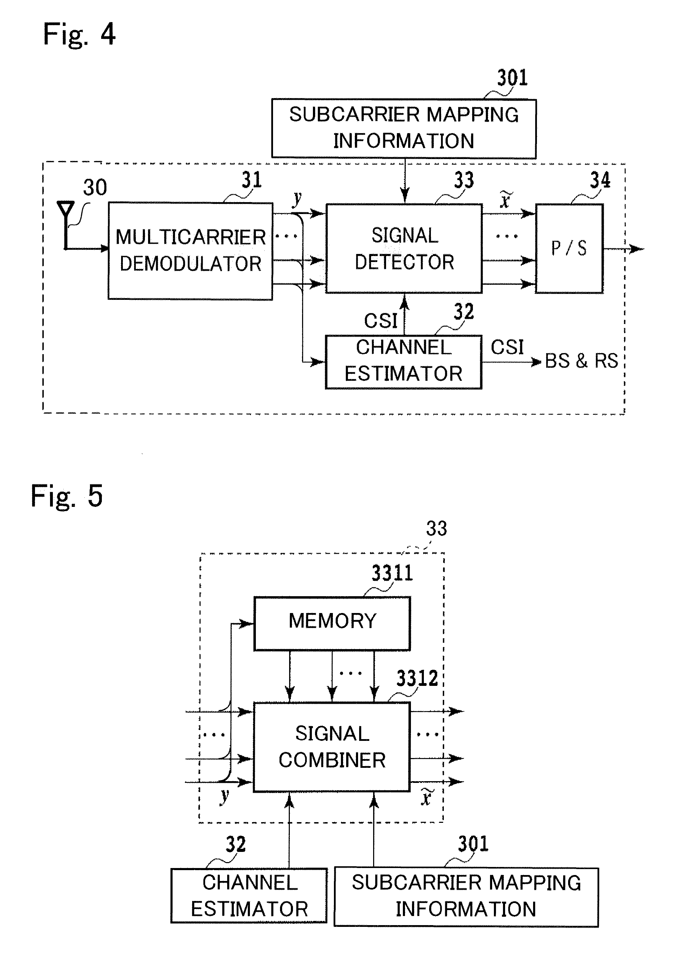

Fig. 4 is a diagram showing functional elements of each mobile station ($MS_{NT}$ or $MS_T$) according to the embodiment. As shown in Fig. 4, the mobile station $MS_{NT}$ or $MS_T$ includes an antenna 30, a multicarrier demodulator 31, a channel estimator 32, a signal detector 33, and a P/S (parallel-to-serial) converter 34. The mobile station uses different time slots for receiving the first composite sequence from the base station BS and the second composite sequence from the radio relay station RS. Therefore, if the mobile station is the first mobile station $MS_T$ which receives both of the first composite sequence and the second composite sequence with the single antenna 30, the mobile station can discriminate the first composite sequence and the second composite sequence that are modulated by different subcarrier sets.

The multicarrier demodulator 31 multicarrier-demodulates the received signal (the first composite sequence or second composite sequence) received by the antenna 30, so as to demultiplex the received signal into a plurality of parallel signals corresponding to the subcarriers. If multicarrier modulation is performed in accordance with OFDM, the multicarrier demodulator 31 performs multicarrier demultiplexing and demodulation using the Fourier transform, so as to form the parallel signals corresponding to the subcarriers.

The channel estimator 32 estimates communication states at the respective subcarriers (frequencies) using the parallel signals supplied from the multicarrier demodulator 31, and produces the CSI (channel state information). The CSI is supplied to the signal detector 33. The CSI is also transmitted (fed back) to the base station BS and the radio relay station RS, so as to be used at the subcarrier mapper 12 of the base station BS and the subcarrier mapper 24 of the radio relay station RS. If FDD (frequency division duplex) is used so that the frequency band for uplink is different from that for downlink, it is easy to transmit the CSI to the base station BS and the radio relay station RS.

The signal detector 33 detects (selects) desired parallel signals destined for this mobile station among the parallel signals (corresponding to the subcarriers) supplied from the multicarrier demodulator 31 on the basis of the subcarrier mapping information 301 including the first subcarrier mapping information from the base station BS and the second subcarrier mapping information from the radio relay station RS. The signal detector 33 recognizes the destination mobile station of each signal supplied from the multicarrier demodulator 31 by, for example, demodulating the subcarriers dedicated to the first and second subcarrier mapping information. In addition, the signal detector 33 uses the CSI supplied from the channel estimator 32 in order to combine signals transmitted from the base station BS and the radio relay station RS, as will be described later. The signal detector 33 supplies the thus obtained parallel signals to the P/S converter 34.

The P/S converter 34 converts the parallel signals supplied from the signal detector 33 into a serial signal sequence.

SIGNAL DETECTOR IN MOBILE STATION WITHOUT INTERFERENCE CANCELLATION

Fig. 5 is a diagram showing functional elements of the signal detector 33 in each mobile station that does not cancel interference according to the embodiment of the present invention. As shown in Fig. 5, the signal detector 33 includes a memory 3311 and a signal combiner 3312.

The memory 3311 stores the parallel multicarrier-demodulated signals supplied from the multicarrier demodulator 31, the multicarrier-demodulated signals corresponding to signals received from the base station BS in past (at time slot [$2i$-1]).

The signal combiner 3312 detects (selects) desired parallel signals destined for this mobile station among the parallel multicarrier-demodulated signals supplied from the multicarrier demodulator 31 on the basis of the subcarrier mapping information 301 sent from the base station BS and the radio relay station RS.

As described above, the mobile station uses different time slots for receiving the first composite sequence directly from the base station BS and the second composite sequence from the radio relay station RS. Data received at current time slot [2$i$] from the radio relay station RS is the same as data received at last time slot [2$i$-1] from the base station BS, which is stored in the memory 3311. Accordingly, the parallel signals currently supplied from the multicarrier demodulator 31 to the signal combiner 3312 contain the same data as that of the parallel signals stored in the memory 3311 at the last time slot.

On the basis of the subcarrier mapping information 301, the signal combiner 3312 specifies desired signals from among the signals currently supplied from the multicarrier demodulator 31 and the signals stored in the memory 3311. The signal combiner 3312, using the communication states of the desired signals on the basis of the CSI supplied form the channel estimator 32, combines the signals by a diversity combining scheme, such as MRC (maximal ratio combining). As as result, if the mobile station is the first mobile station $MS_T$ at a position where it can perform cooperative communication, the mobile station combines the desired signals, thereby obtaining the cooperative diversity gain. In this embodiment, the cooperative diversity gain is realized by two branches, more specifically, by combining signals transmitted via different time slots from the base station BS and the radio relay station RS although the mobile station has a single antenna 30.

EXAMPLE OF FIRST EMBODIMENT

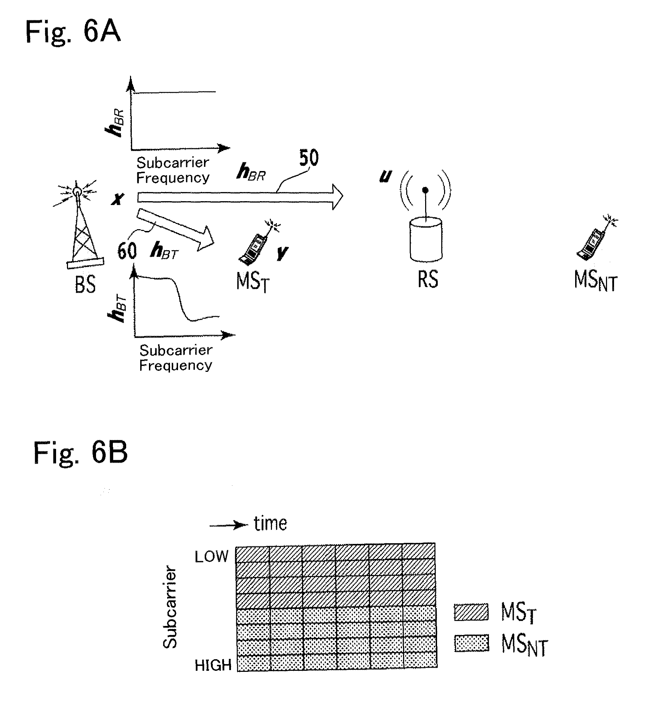

Next, with reference to Figs. 6A through 9B, an example of a radio communication method in which radio resources are allocated in accordance with this embodiment will be described. This method is carried out in a radio relay system using OFDMA as the multicarrier communication scheme. In the example, each of the base station BS, the radio relay station RS, and the mobile stations has a single antenna in order to execute half-duplex relay in which reception and transmission at the relay station RS are conducted at different time slots.

In the following description, each parameter denoted in bold face is a vector form consisting of values at different frequencies (subcarriers), whereas each parameter denoted in small face is a scalar form having a value at a frequency (subcarrier).

Fig. 6A is a diagram showing a communication status at time slot [2$i$-1] where $i$ is a natural number. As shown in Fig. 6A, the base station BS as the transmission source transmits to the radio relay station RS and the mobile station $MS_T$ a first composite sequence including parallel signals $\boldsymbol{x}$[2$i$-1] which include signals $\boldsymbol{x}_{NT}$[2$i$-1] destined for the second mobile station $MS_{N\,T}$ and signals $\boldsymbol{x}_T$[2$i$-1] destined for the first mobile station $MS_T$, the signals $\boldsymbol{x}_{NT}$[2$i$-1] and the signals $\boldsymbol{x}_T$[2$i$-1] being modulated onto different subcarriers.

The subcarrier allocation for the parallel signals $\boldsymbol{x}$[2$i$-1] at the base station BS will be described next. The channel characteristics $\boldsymbol{h}_{BR}$ and $\boldsymbol{h}_{BT}$ are reported by the CSI transmitted (fed back) to the base station BS. As shown in Fig. 6A, the channel characteristic $\boldsymbol{h}_{BR}$ for the radio link 50 is affected by frequency flat fading since the radio link 50 tends to be in LOS propagation environment, whereas the channel characteristic $\boldsymbol{h}_{BT}$ for the radio link 60 is affected by frequency selective fading since the radio link 60 tends to be in NLOS (multipath) propagation environment. In this case, for transmission from the base station BS to the radio relay station RS, the radio relay station RS will obtain equal reception qualities even if any subcarriers are selected at resource allocation (subcarrier mapping) for the radio link 50. Accordingly, in this embodiment, the base station BS gives higher priority to the mobile station $MS_T$ than the mobile station $MS_{NT}$ and allocates the best subcarriers among the radio link 60 to the signals $\boldsymbol{X}_T$[2$i$-1] destined for the first mobile mobile station $MS_T$, on the basis of the CSI 101 related to the channel characteristic $\boldsymbol{h}_{BT}$. Then, the base station BS allocates the remaining best subcarriers to the signals $X_{NT}$[2$i$-1] destined for the second mobile station $MS_{N\,T}$. Thus, the base station BS determines an order of priority for destination mobile stations in connection with subcarrier mapping on the basis of whether the individual mobile station is the first mobile station $MS_T$ or the second mobile station $MS_{NT}$.

The policy for allocation of subcarriers after determining the order of priority for the mobile station $MS_T$ and mobile station $MS_{NT}$ is described next. First, on the basis of the CSI 101 related to the channel characteristic (i.e., channel characteristic $\boldsymbol{h}_{BT}$) corresponding to the mobile station (i.e., the mobile station $MS_T$) with the higher priority, the base station BS secures (allocates), for the mobile station with the higher priority, the necessary number of best subcarriers among the radio link to the mobile station. Then, on the basis of the CSI 101 related to the channel characteristic (i.e., channel characteristic $\boldsymbol{h}_{BR}$) corresponding to the mobile station (i.e., the mobile station $MS_{NT}$) with the lower priority, the base station BS secures (allocates), for the mobile station with the lower priority, the necessary number of remaining best subcarriers of which the conditions are better among the radio link to the radio relay station RS (since this mobile station cannot directly communicate with the base station BS).

Fig. 6B shows the allocation of subcarriers at the base station at the communication status shown in Fig. 6A. As shown in Fig. 6B, subcarriers at lower frequencies which are most advantageous for the mobile station $MS_T$ are allocated to communication to the mobile station $MS_T$, whereas remaining subcarriers at higher frequencies are allocated to communication to the mobile station $MS_{NT}$.

Let us assume that a signal to be transmitted to which a subcarrier $f$ is allocated is called signal $x_f$[2$i$-1]. A signal $y_f$[2$i$-1] received at time slot [2$i$-1] at the mobile station $MS_T$ and a signal $u_f$[2$i$-1] received at time slot [2$i$-1] at the radio relay station RS can be expressed by Equations (1) and (2).

$$y_f[2i-1] = h_{BT,f}[2i-1]x_f[2i-1] + n_{T,f}[2i-1] \quad \dots (1)$$

$$u_f[2i-1] = h_{BR,f}[2i-1]x_f[2i-1] + n_{R,f}[2i-1] \quad \dots (2)$$

where $n_{T,f}[2i-1]$ is a noise at time slot $[2i-1]$ at the mobile station $MS_T$ and $n_{R,f}[2i-1]$ is a noise at time slot $[2i-1]$ at the radio relay station RS.

The mobile station $MS_T$ stores the received signal $y_f[2i-1]$ and the information on the channel characteristic $h_{BT,f}[2i-1]$ in the memory 3311 of the signal detector 33. On the other hand, the relay section 23 of the radio relay station RS conducts non-regenerative relaying for the received signal $u_f[2i-1]$, using ZF (Zero Forcing). More specifically, the relay section 23 applies the inverse transfer function to the received signal $u_f[2i-1]$, the inverse transfer function being the inverse of the transfer function between the base station BS and the radio relay station RS. The resulting relayed signal $\hat{u}_f[2i-1]$ can be expressed by Equation (3).

$$\hat{u}_f[2i-1] = \left(h_{BR,f}[2i-1]\right)^{-1} u_f[2i-1] = x_f[2i-1] + \left(h_{BR,f}[2i-1]\right)^{-1} n_{R,f}[2i-1]$$

$$\dots (3)$$

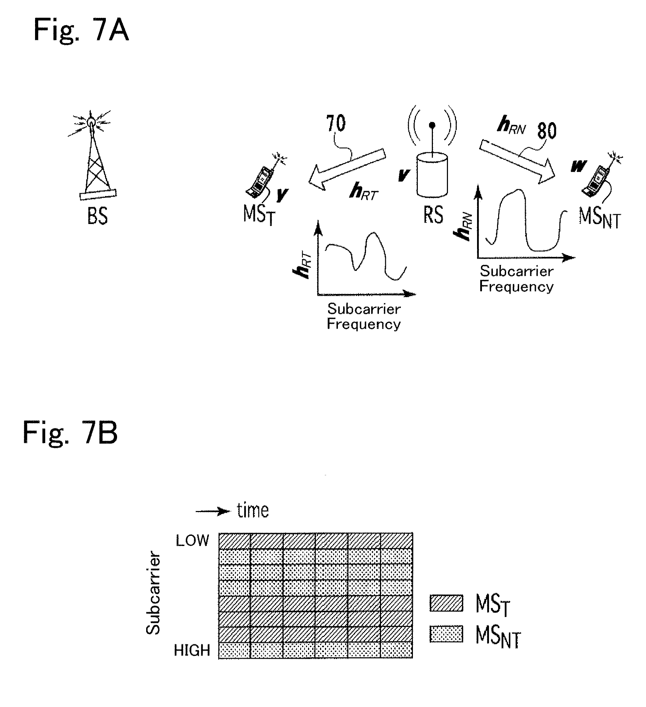

As shown in Fig. 7A, the radio relay station RS transmits the relayed signals as signals $v[2i]$ at the next time slot (time slot $[2i]$) to the mobile stations $MS_{NT}$ and $MS_T$. Before transmission at the radio relay station RS, the subcarrier mapper 24 of the radio relay station RS executes subcarrier allocation. More specifically, the relayed signal received from the base station BS and modulated at the subcarrier $f$ is mapped to another subcarrier $m(f)$ as expressed by Equation (4).

$$v_{m(f)}[2i] = \hat{u}_f[2i-1] \quad \dots (4)$$

Subcarrier mapping (subcarrier allocation) at the radio relay station RS will be described next. The channel characteristics $\boldsymbol{h}_{RT}$ and $\boldsymbol{h}_{RN}$ are reported by the CSI transmitted to the radio relay station RS. As shown in Fig. 7A, the channel characteristic $\boldsymbol{h}_{RT}$ for the radio link 70 is affected by frequency selective fading, whereas the channel characteristic $\boldsymbol{h}_{RN}$ for the radio link 80 is also affected by frequency selective fading.

Regardless of the channel characteristics $\boldsymbol{h}_{RT}$ and $\boldsymbol{h}_{RN}$, the radio relay station RS gives higher priority to the second mobile station $MS_{NT}$ than the first mobile station $MS_T$ since the second mobile station $MS_{NT}$ cannot directly communicate with the base station BS whereas the first mobile station $MS_T$ can directly communicate with the base station BS and the radio relay station RS. The radio relay station RS allocates the best subcarriers among the radio link 80 to the signals $\boldsymbol{v}_{NT}[2i]$ destined for the second mobile station $MS_{NT}$, on the basis of the CSI 201 related to the channel characteristic $\boldsymbol{h}_{RN}$. Then, the radio relay station RS allocates the remaining best subcarriers to the signals $\boldsymbol{v}_T[2i]$ destined for the first mobile mobile station $MS_T$, on the basis of the CSI 201 related to the channel characteristic $\boldsymbol{h}_{RT}$.

The policy for allocation of subcarriers after determining the order of priority for the mobile station $MS_T$ and mobile station $MS_{NT}$ is described next. First, on the basis of the CSI 201 related to the channel characteristic $\boldsymbol{h}_{RN}$, the radio relay station RS secures (allocates), for the mobile station (i.e., the mobile station $MS_{NT}$) with the higher priority, the necessary number of best subcarriers among the radio link 80 to the mobile station. Then, on the basis of the CSI 201 related to the channel characteristic $\boldsymbol{h}_{RT}$, the radio relay station RS secures (allocates), for the mobile station (i.e., the mobile station $MS_T$) with the lower priority, the necessary number of remaining best subcarriers of which the conditions are better among the radio link 70 to the mobile station.

Fig. 7B shows the allocation of subcarriers at the radio relay station RS at the communication status shown in Fig. 7A. As shown in Fig. 7B, subcarriers which are most advantageous for the mobile station $MS_{NT}$ are allocated to the mobile station $MS_{NT}$, whereas remaining subcarriers which are relatively advantageous for the mobile station $MS_T$ are allocated to the mobile station $MS_T$.

When a relayed signal mapped on the subcarrier $m(f)$ is called $v_{m(f)}[2i]$, the received signal $w_{m(f)}[2i]$ received at time slot $[2i]$ at the mobile station $MS_{NT}$ can be expressed by Equation (5) whereas the received signal $y_{m(f)}[2i]$ received at time slot $[2i]$ at the mobile station $MS_T$ can be expressed by Equation (6).

$$w_{m(f)}[2i] = h_{RN,m(f)}[2i]v_{m(f)}[2i] + n_{N,m(f)}[2i]$$

$$= h_{RN,m(f)}[2i]x_f[2i-1] + h_{RN,m(f)}[2i](h_{BR,f}[2i-1])^{-1}n_{R,f}[2i-1] + n_{N,m(f)}[2i] \quad \ldots (5)$$

$$y_{m(f)}[2i] = h_{RT,m(f)}[2i]v_{m(f)}[2i] + n_{T,m(f)}[2i]$$

$$= h_{RT,m(f)}[2i]x_f[2i-1] + h_{RT,m(f)}[2i](h_{BR,f}[2i-1])^{-1}n_{R,f}[2i-1] + n_{T,m(f)}[2i] \quad \ldots (6)$$

where $n_{N,m(f)}[2i]$ is a noise at time slot $[2i]$ at the mobile station $MS_{NT}$ and $n_{T,m(f)}[2i]$ is a noise at time slot $[2i]$ at the mobile station $MS_T$.

The second mobile station $MS_{NT}$, using the second subcarrier mapping information, produces each desired signal $\tilde{x}_{N,f}[2i-1]$ destined for the mobile station $MS_{NT}$ as expressed by Equation (7).

$$\tilde{x}_{N,f}[2i-1] = \left(h_{RN,m(f)}[2i]\right)^{-1} \cdot w_{m(f)}[2i] \quad \ldots (7)$$

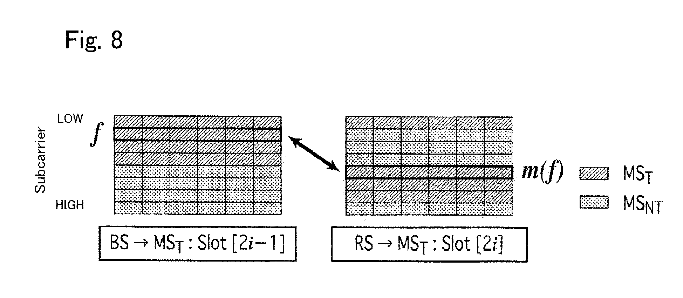

On the other hand, the first mobile station $MS_T$, using the first subcarrier mapping information and the second subcarrier mapping information, discriminates the received signal $y_{m(f)}[2i]$ received at current time slot $[2i]$ (from the radio relay station RS) and the received signal $y_f[2i-1]$ received at last time slot $[2i-1]$ (from the base station BS) shown in Fig. 8, and combines these received signals to produce each of desired signals destined for the mobile station $MS_T$.

Fig. 8 shows the subcarrier allocations at the radio relay station RS at time slot $[2i]$ and at the base station BS at time slot $[2i-1]$. As shown in Fig. 8, the subcarrier allocation at the radio relay station RS at time slot $[2i]$ is different from that at the base station BS at time slot $[2i-1]$. For example, the signal modulated by the secondary lowest frequency subcarrier (#2) at time slot $[2i-1]$ at the base station BS corresponds to the signal modulated by the fifth lowest frequency subcarrier (#5) at time slot $[2i]$ at the radio relay station RS. In this case, $f = 2$ and $m(2) = 5$. These signals arrive at the mobile station $MS_T$, and the mobile station $MS_T$ combines these signals.

The above-described signals $Y_f^{\{1\}}$ received at the first mobile station $MS_T$ at the two consecutive time slots from the base station BS and the radio relay station RS can be expressed by Equation (8).

$$\mathbf{Y}_f^{\{1\}} = \begin{bmatrix} y_f[2i-1] \\ y_{m(f)}[2i] \end{bmatrix}$$

$$= \begin{bmatrix} h_{BT,f}[2i-1] \\ h_{RT,m(f)}[2i] \end{bmatrix} x_f[2i-1] + \begin{bmatrix} n_{T,f}[2i-1] \\ h_{RT,m(f)}[2i]\left(h_{BR,f}[2i-1]\right)^{-1}n_{R,f}[2i-1] + n_{T,m(f)}[2i] \end{bmatrix}$$

$$\ldots (8)$$

The produced desired signal $\tilde{x}_{T,f}[2i-1]$ resulting from combining the signals by MRC (maximal ratio combining) at the mobile station $MS_T$ can be expressed by Equation (9).

$$\widetilde{x}_{T,f}[2i-1] = \frac{\begin{bmatrix} h_{BT,f}[2i-1] \\ h_{RT,m(f)}[2i] \end{bmatrix}^{\mathrm{H}} \cdot \mathbf{Y}_f^{\{1\}}}{\left\| \begin{bmatrix} h_{BT,f}[2i-1] \\ h_{RT,m(f)}[2i] \end{bmatrix} \right\|}$$

$$\dots (9)$$

where $\cdot^{\mathrm{H}}$ is the complex conjugate transposition and $\|\cdot\|$ denotes the Euclidean norm.

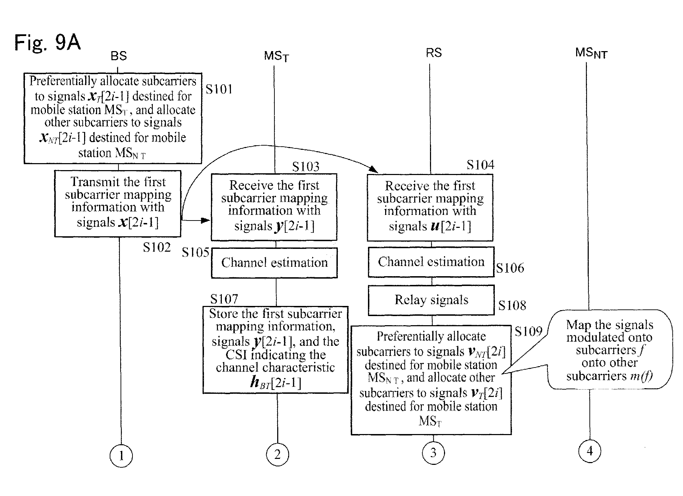

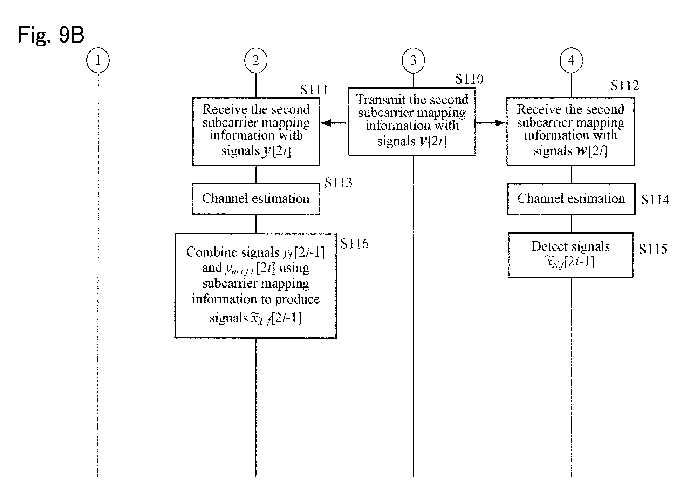

Operations of the radio communication method in which radio resources are allocated in accordance with the first embodiment will be described with reference to the flowchart shown in Figs. 9A and 9B.

At step S101, the base station BS executes the subcarrier allocation for the parallel signals $x[2i-1]$ to be transmitted to the radio relay station RS and the mobile station $MS_T$. More specifically, using the information on the channel characteristics $h_{BT}$, the base station BS preferentially allocates the best subcarriers to the signals $x_T[2i-1]$ destined for the first mobile station $MS_T$. In addition, the base station BS allocates the remaining best subcarriers to the signals $x_{NT}[2i-1]$ which is destined for the second mobile station $MS_{NT}$ and will be transmitted from the base station BS to the radio relay station RS. As described in conjunction with Fig. 6A, when the channel characteristic $h_{BR}$ for the radio link 50 is affected by frequency flat fading, the radio relay station RS (and thus the mobile station $MS_{NT}$) will obtain similar reception qualities even if any subcarriers are selected at resource allocation (subcarrier mapping) for the radio link 50. Accordingly, the base station BS gives higher priority to the mobile station $MS_T$ than the mobile station $MS_{NT}$ in connection with subcarrier allocation.

At step S102, the base station BS transmits the first subcarrier mapping information with the parallel signals $x[2i-1]$.

The mobile station $MS_T$, at step S103, receives the first subcarrier mapping information with the parallel signals $y[2i-1]$ from the base station BS. The radio relay station RS, at step S104, receives the first subcarrier mapping information with the parallel signals $u[2i-1]$ from the base station BS.

At steps S105 and S 106, the mobile station $MS_T$ and the radio relay station RS estimate the channel characteristics $h_{BT}[2i-1]$ and $h_{BR}[2i-1]$, respectively.

At step S 107, the mobile station $MS_T$ stores the first subcarrier mapping information, the parallel signals $y[2i-1]$, and the CSI indicating the channel characteristic $h_{BT}[2i-1]$ in the memory 3311 of the signal detector 33.

At step S108, the radio relay station RS relays the received signals. More specifically, the radio relay station RS conducts non-regenerative relaying of the received signals $u[2i-1]$, using ZF (Zero Forcing) to produce relayed signals $\hat{u}[2i-1]$.

At step S109, the radio relay station RS maps (allocates) subcarriers to the relayed signals to be transmitted to the mobile stations $MS_{NT}$ and $MS_T$. More specifically, the radio relay station RS preferentially allocates the best subcarriers among the radio link 80 to the signals $v_{NT}[2i]$ destined for the second mobile station $MS_{NT}$, on the basis of the CSI 201 related to the channel characteristic $h_{RN}$. Then, the radio relay station RS allocates the remaining best subcarriers among the radio link 70 to the signals $v_T[2i]$ destined for the first mobile station $MS_T$, on the basis of the CSI 201 related to the channel characteristic $h_{RT}$. In subcarrier mapping, the signals modulated onto the subcarriers $f$ are modulated onto other subcarriers $m(f)$. This can be expressed by $v_{m(f)}[2i]=\hat{u}_f[2i-1]$.

The radio relay station RS, at step S110, sends the second subcarrier mapping information with the signals $v[2i]$.

The mobile station $MS_T$, at step S111, receives the second subcarrier mapping information with the signals $y[2i]$. The mobile station $MS_{NT}$, at step S112, receives the second subcarrier mapping information with the signals $w[2i]$.

At steps S113 and S114, the mobile stations $MS_T$ and $MS_{NT}$ estimate the channel characteristics $h_{RT}[2i]$ and $h_{RN}[2i]$, respectively.

The mobile station $MS_{NT}$, at step S115, uses the second subcarrier mapping information for detecting, from among the received signals $w_{m(f)}[2i]$, the signals $\widetilde{x}_{N,f}[2i-1]$ destined for the mobile station $MS_{NT}$.

The mobile station $MS_T$, at step S116, uses the first subcarrier mapping information and the second subcarrier mapping information for detecting the received signals $y_{m(f)}[2i]$ received at current time slot $[2i]$ from the radio relay station RS and the received signals $y_f[2i-1]$ received at last time slot $[2i-1]$ from the base station BS, and combines them to produce the desired signals $\widetilde{x}_{T,f}[2i-1]$ destined for the mobile station $MS_T$.

As described above, in the embodiment, the radio relay station RS determines the order of priority for mobile stations as to subcarrier mapping (subcarrier allocation) on the basis of the ability of each mobile station to perform cooperative communication, and gives higher priority to the second mobile station $MS_{NT}$ than the first mobile station $MS_T$. This may improve the communication quality at the mobile station $MS_{NT}$, and accordingly, the area covered by the radio relay station RS can be ensured widely, in which a necessary quality level is achieved.

In the embodiment, the base station BS determines the order of priority for mobile stations as to subcarrier mapping (subcarrier allocation) on the basis of the ability of each mobile station to perform cooperative communication, and gives higher priority to the first mobile station $MS_T$ than the second mobile station $MS_{NT}$. The mobile station $MS_T$ combines the signals received from the base station BS and radio relay station RS which may be modulated by different subcarriers on the basis of the first and second subcarrier mapping information sent from the base station BS and the radio relay station RS. This may improve the communication quality at the mobile station $MS_T$, and may enhance the system capacity.

SECOND EMBODIMENT

A second embodiment of the present invention will be described below. In the following description, differences between the first and second embodiments will be elaborated.

In the first embodiment, at time slot [2$i$] where $i$ is a natural number, only the radio relay station RS sends downlink parallel signals $v$[2$i$]. In the second embodiment, at time slot [2$i$], the base station BS sends downlink parallel signals $y$[2$i$] of which the contents are the same as in the parallel signals $y$[2$i$-1] previously transmitted, and simultaneously, the radio relay station RS sends downlink parallel signals $v$[2$i$] of which the contents are the same as in the parallel signals $y$[2$i$-1] previously transmitted from the base station BS. This may further improve the cooperative diversity gain at the mobile station $MS_T$. For this purpose, the subcarrier mapper 12 resends to the subcarrier modulator 13 the parallel signals previously transmitted destined for the first mobile station $MS_T$. The subcarrier mapper 12 allocates subcarriers to the retransmitted parallel signals, independently of the subcarrier allocation for the parallel signals previously transmitted.

On the other hand, radio communication from the base station BS to the second mobile station $MS_{NT}$ via the radio relay station RS in the second embodiment is the same as that in the first embodiment, and therefore, this will not be described in detail.

SIGNAL DETECTOR IN MOBILE STATION WITH INTERFERENCE CANCELLATION

At the time slot at which the radio relay station RS sends downlink parallel signals, the base station BS also transmits to the mobile station $MS_T$ downlink parallel signals destined for the mobile station $MS_T$. Therefore, the branches used for combining at the mobile station $MS_T$ are increased, and the cooperative diversity gain can be enhanced. In this time slot, if frequency subcarriers allocated for the mobile station $MS_T$ at the radio relay station RS are different from those allocated for the mobile station $MS_T$ at the base station BS, the radio relay station RS may use other frequency subcarriers for another mobile station, the other frequency subcarriers being the same as those used at the base station BS for transmission to the mobile station $MS_T$. Additionally, the base station BS may also use other frequency subcarriers for another mobile station, the other frequency subcarriers being the same as those used at the radio relay station RS. In this case, interference will occur between subcarriers from the base station BS destined for a mobile station and subcarriers from the radio relay station RS destined for another mobile station.

In the second embodiment, each mobile station may include an interference canceller which executes signal separation (interference cancellation), in which interference-cancelled signals destined for the mobile station are derived. Then, if the mobile station is the first mobile station $MS_T$, it combines the interference-cancelled signals, thereby obtaining cooperative diversity gain.

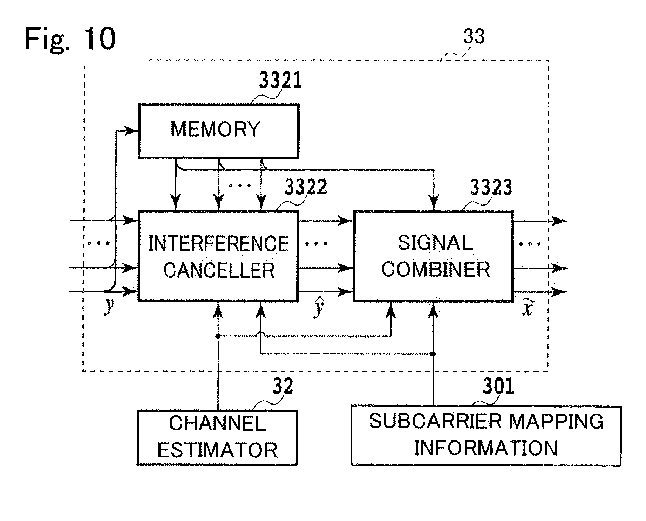

Fig. 10 is a diagram showing functional elements of a signal detector 33 in each mobile station that cancels interference according to a second embodiment. As shown in Fig. 10, the signal detector 33 includes a memory 3321, an interference canceller 3322, and a signal combiner 3323.

The memory 3321 stores the parallel multicarrier-demodulated signals supplied from the multicarrier demodulator 31, the multicarrier-demodulated signals corresponding to signals received from the base station BS in past (at time slot [2$i$-1]).

The interference canceller 3322 detects (selects) desired parallel signals destined for this mobile station among the parallel multicarrier-demodulated signals supplied from the multicarrier demodulator 31 on the basis of the subcarrier mapping information 301 sent from the base station BS and the radio relay station RS. At last time slot [2$i$-1], the mobile station receives signals of the first composite sequence directly from the base station BS if the mobile station is the first mobile station $MS_T$. At current time slot [2$i$], the mobile station receives signals of the second composite sequence from the radio relay station RS. At current time slot [2$i$], the mobile station receives signals of the first composite sequence directly from the base station BS if the mobile station is the first mobile station $MS_T$. On the basis of the subcarrier mapping information 301, the interference canceller 3322 specifies desired signals from among the signals currently supplied from the multicarrier demodulator 31, which are related to the first and second composite sequences received at time slot [2$i$] from the base station BS and the radio relay station RS. On the basis of the subcarrier mapping information 301, the interference canceller 3322 specifies desired signals from among the signals stored in the memory 3311, which are related to the first composite sequence received at time slot [2$i$-1] from the base station BS.

In addition, the interference canceller 3322 cancels interference components from the desired parallel signals destined for this mobile station received at current time slot [2$i$]. For this purpose, the interference canceller 3322 generates replica signals from the signals stored at last time slot [2$i$-1] in the memory 3311, which represent undesired signals having the same frequencies as those of the desired signals at current time slot [2i]. If the first mobile station $MS_T$ receives, at time slot [2$i$], a first signal destined for the mobile station $MS_T$ itself and modulated onto a subcarrier from the base station BS and a second signal destined for another mobile station $MS_{NT}$ modulated onto the subcarrier from the radio relay station RS, the first signal is the desired signal for the mobile station $MS_T$, but is interfered with the undesired second signal. At time slot [2$i$-1], the mobile station $MS_T$ also received the undesired second signal which might be modulated onto a different subcarrier from the base station BS. Based on the first and second subcarrier mapping information describing allocation of subcarriers to the signals at the base station BS and the radio relay station RS, the interference canceller 3322 finds the second signal from among the signals stored at last time slot [2$i$-1] in the memory 3311. The interference canceller 3322 generates a replica signal on the basis of the second signal at last time slot [2$i$-1] for canceling from the first signal at current time slot [2$i$] the interference component resulting from the second signal at current time slot [2$i$]. If the first mobile station $MS_T$ receives, at time slot [2$i$], a third signal destined for the mobile station $MS_T$ itself and modulated onto a subcarrier from the radio relay station RS and a fourth signal destined for another mobile station $MS_{NT}$ modulated onto the subcarrier from the base station BS, the third signal is the desired signal for the mobile station $MS_T$, but is interfered with the undesired fourth signal. At time slot [2$i$-1], the mobile station $MS_T$ also received the undesired fourth signal which might be modulated onto a different subcarrier from the base station BS. Based on the first and second subcarrier mapping information, the interference canceller 3322 finds the fourth signal from among the signals stored at last time slot [2$i$-1] in the memory 3311. The interference canceller 3322 generates a replica signal on the basis of the fourth signal at last time slot [2$i$-1] for canceling from the third signal at current time slot [2$i$] the interference component resulting from the fourth signal at current time slot [2$i$]. The interference canceller 3322 cancels interference components from the desired signals at current time slot [2$i$], using the replica signals.

On the basis of the subcarrier mapping information 301, the signal combiner 3323 specifies the interference-cancelled desired signals (at current time slot [2$i$]) currently supplied from the interference canceller 3322 and the signals (at last time slot [2$i$-1]) stored in the memory 3321. The signal combiner 3323, using the communication states of the desired signals on the basis of the CSI supplied form the channel estimator 32, combines the signals by a diversity combining scheme. As a result, if the mobile station is the first mobile station $MS_T$ at a position where it can perform cooperative communication, the mobile station combines the desired signals, thereby obtaining the cooperative diversity gain.

## EXAMPLES OF SECOND EMBODIMENT

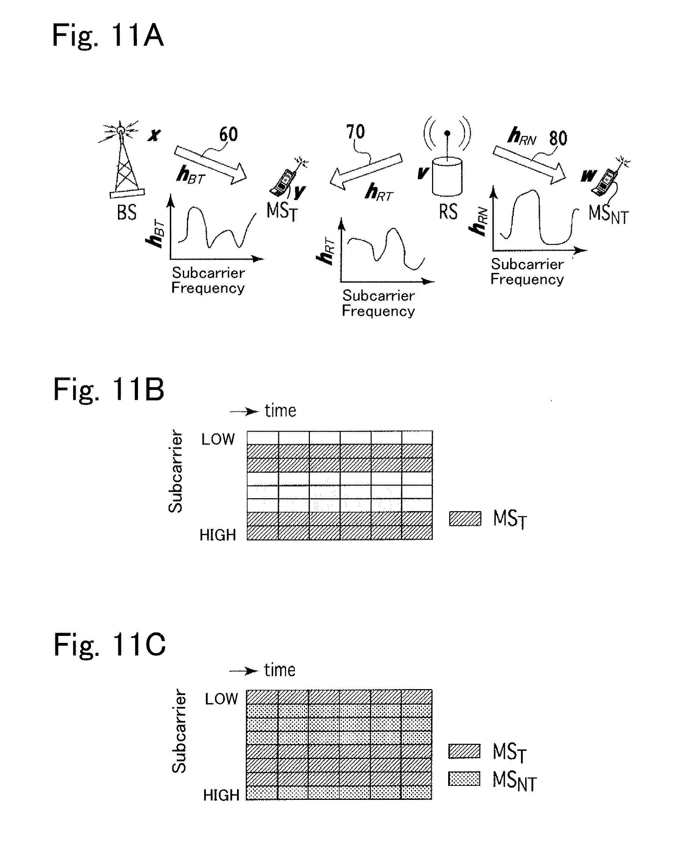

Next, with reference to Figs. 11A through 14B, examples of a radio communication method in which radio resources are allocated in accordance with the second embodiment will be described. This method is carried out in a radio relay system using OFDMA as the multicarrier communication scheme. In the examples of the second embodiment, the subcarrier allocation (radio resource allocation) at the base station BS for radio transmission at time slot [2$i$-1] is the same as that at the base station BS for radio transmission at time slot [2$i$-1] in the above-described example of the first embodiment, and therefore, this will not be described in detail.

Fig. 11A is a diagram showing a communication status at time slot [2$i$] according to the second embodiment. As shown in Fig. 11A, at time slot [2$i$], the base station BS sends the first composite sequence including parallel signals $x$[2$i$] to the mobile station $MS_T$ whereas the radio relay station RS sends the second composite sequence including parallel signals $v$[2$i$] to the mobile stations $MS_{N\,T}$ and $MS_T$. The parallel signals $x$[2$i$] at time slot [2$i$] include only signals $x_T$[2$i$] destined for the first mobile station $MS_T$.

Subcarrier allocation for parallel signals $x$[2$i$] at time slot [2$i$] at the base station BS will be described next. The base station BS allocates the best subcarriers among the radio link 60 to the signals $x_T$[2$i$] destined for the first mobile mobile station $MS_T$, on the basis of the CSI 101 related to the channel characteristic $h_{BT}$. Fig. 11B shows the allocation of subcarriers at the base station at the communication status shown in Fig. 11A. The allocation of subcarriers at current time slot [2$i$] at the base station BS is different from that at last time slot [2$i$-1]. At time slot [2$i$], the base station BS reallocates subcarriers $l(f)$ to signals transmitted to the mobile station $MS_T$ at time slot [2$i$-1] that were modulated onto subcarriers $f$ at time slot [2$i$-1], and resends the signals modulated onto the subcarriers $l(f)$. This can be expressed by $x_{l(f)}$ [2$i$] = $x_f$[2$i$-1].

Subcarrier mapping (subcarrier allocation) for the parallel signals $v$[2$i$] to be transmitted to the mobile stations

$MS_{NT}$ and $MS_T$ at the radio relay station RS in the second embodiment is the same as that in the example of the first embodiment. Fig. 11C shows the allocation of subcarriers at the radio relay station RS at the communication status shown in Fig. 11A.

Let us assume that signals mapped on the subcarriers $l(f)$ at the base station BS at time slot $[2i]$ are expressed as $x_{l(f)}$ $[2i]$ and signals mapped on the subcarriers $m(f)$ at the radio relay station RS at time slot $[2i]$ are expressed as $v_{m(f)}$ $[2i]$.

The radio communication scheme at the second mobile station $MS_{NT}$ in this embodiment is the same as that in the first embodiment, and therefore, this will not be described in detail.

A received signal $y_{l(f)}$ $[2i]$ received with a subcarrier $l(f)$ at time slot $[2i]$ from the base station BS at the mobile station $MS_T$ can be expressed by Equation (10). A received signal received with a subcarrier $m_{(f)}$ at time slot $[2i]$ from the radio relay station RS at the mobile station $MS_T$ can be expressed by Equation (11).

$$y_{l(f)}[2i] = h_{BT,l(f)}[2i]x_{l(f)}[2i] + h_{RT,l(f)}[2i]v_{l(f)}[2i] + n_{T,l(f)}[2i]$$
$$= h_{BT,l(f)}[2i]x_f[2i-1] + h_{RT,l(f)}[2i]x_{m^{-1}(l(f))}[2i-1]$$
$$+ h_{RT,l(f)}[2i]\left(h_{BR,m^{-1}(l(f))}[2i-1]\right)^{-1} n_{R,m^{-1}(l(f))}[2i-1] + n_{T,l(f)}[2i]$$

$$\ldots (10)$$

$$y_{m(f)}[2i] = h_{RT,m(f)}[2i]v_{m(f)}[2i] + h_{BT,m(f)}[2i]x_{m(f)}[2i] + n_{T,m(f)}[2i]$$
$$= h_{RT,m(f)}[2i]x_f[2i-1] + h_{RT,m(f)}[2i]\left(h_{BR,f}[2i-1]\right)^{-1} n_{R,f}[2i-1]$$
$$+ h_{BT,m(f)}[2i]x_{l^{-1}(m(f))}[2i-1] + n_{T,m(f)}[2i]$$

$$\ldots (11)$$

As can be understood from Equation (10), the described signal component mapped on the subcarrier $l(f)$ and sent from the base station BS is interfered with an undesired signal component sent from the radio relay station RS. Similarly, as can be understood from Equation (11), the desired signal component mapped on the subcarrier $m(f)$ and sent from the radio relay station RS is interfered with an undesired signal component sent from the base station BS.

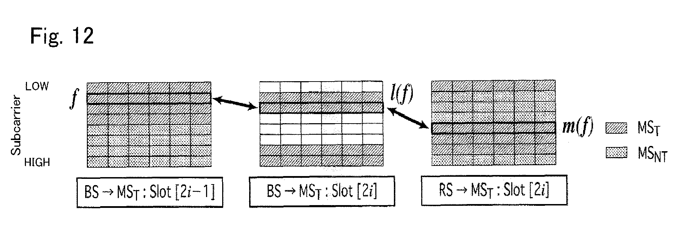

The mobile station $MS_T$, using the subcarrier mapping information 301 describing the subcarriers $l(f)$ and $m(f)$, detects the received signals $y_{l(f)}$ $[2i]$ and $y_{m(f)}[2i]$ received at the current time slot (time slot $[2i]$) and the received signals $y_f[2i-1]$ received at the last time slot (time slot $[2i-1]$) shown in Fig. 12, and combines these received signals.

As shown in Fig. 12, the subcarrier allocation at the radio relay station RS at time slot $[2i]$, the subcarrier allocation at the base station BS at time slot $[2i]$, and the subcarrier allocation at the base station BS at time slot $[2i-1]$ are different from one another. For example, the signal modulated by the secondary lowest frequency subcarrier (#2) at time slot $[2i-1]$ at the base station BS corresponds to the signal modulated by the third lowest frequency subcarrier (#3) at time slot $[2i]$ at the base station BS, which corresponds to the signal modulated by the fifth lowest frequency subcarrier (#5) at time slot $[2i]$ at the radio relay station RS. In this case, $f = 2$, $l(2) = 3$, and $m(2) = 5$. These signals arrive at the mobile station $MS_T$.

The signals $Y_f^{[2]}$ received at the mobile station $MS_T$ at the two consecutive time slots can be expressed by Equation (12).

$$\mathbf{Y}_f^{\{2\}} = \begin{bmatrix} y_f[2i-1] \\ y_{l(f)}[2i] \\ y_{m(f)}[2i] \end{bmatrix} = \begin{bmatrix} h_{BT,f}[2i-1] \\ h_{BT,l(f)}[2i] \\ h_{RT,m(f)}[2i] \end{bmatrix} x_f[2i-1] + \begin{bmatrix} 0 \\ h_{RT,l(f)}[2i]x_{m^{-1}(l(f))}[2i-1] \\ h_{BT,m(f)}[2i]x_{l^{-1}(m(f))}[2i-1] \end{bmatrix}$$

$$+ \begin{bmatrix} n_{T,f}[2i-1] \\ h_{RT,l(f)}[2i]\left(h_{BR,m^{-1}(l(f))}[2i-1]\right)^{-1}n_{R,m^{-1}(l(f))}[2i-1] + n_{T,l(f)}[2i] \\ h_{RT,m(f)}[2i]\left(h_{BR,f}[2i-1]\right)^{-1}n_{R,f}[2i-1] + n_{T,m(f)}[2i] \end{bmatrix}$$

$$\dots (12)$$

EXAMPLE OF SECOND EMBODIMENT (MOBILE STATION WITHOUT INTERFERENCE CANCELLATION)

In the second embodiment in which the base station BS and the radio relay station RS simultaneously transmits signals, if the first mobile station $MS_T$ is of a type having a signal detector 33 shown in Fig. 5, the signal detector 33 does not cancel interference and combines the received signals destined for this mobile station by MRC (maximal ratio combining). The combined signal $\tilde{x}_{T,f}[2i\text{-}1]|_{\text{w/o IC}}$ resulting from combining the corresponding signals by MRC (maximal ratio combining) at the mobile station $MS_T$ can be expressed by Equation (13).

$$\tilde{x}_{T,f}[2i-1]\Big|_{\text{w/o IC}} = \frac{\begin{bmatrix} h_{BT,f}[2i-1] \\ h_{BT,l(f)}[2i] \\ h_{RT,m(f)}[2i] \end{bmatrix}^{H} \cdot \mathbf{Y}_f^{\{2\}}}{\left\| \begin{bmatrix} h_{BT,f}[2i-1] \\ h_{BT,l(f)}[2i] \\ h_{RT,m(f)}[2i] \end{bmatrix} \right\|}$$

$$\dots (13)$$

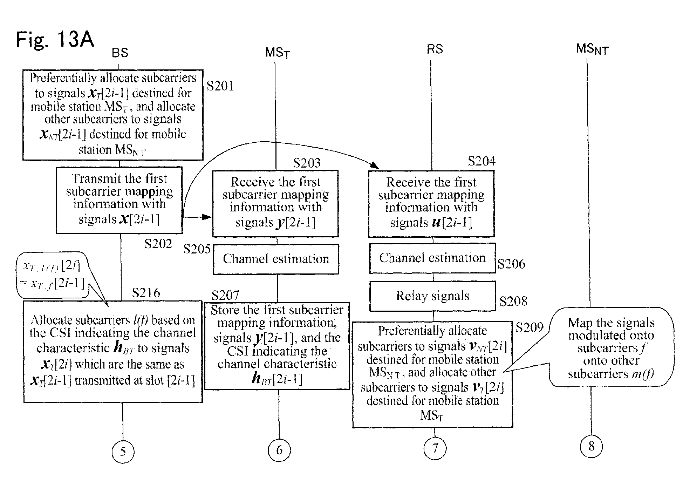

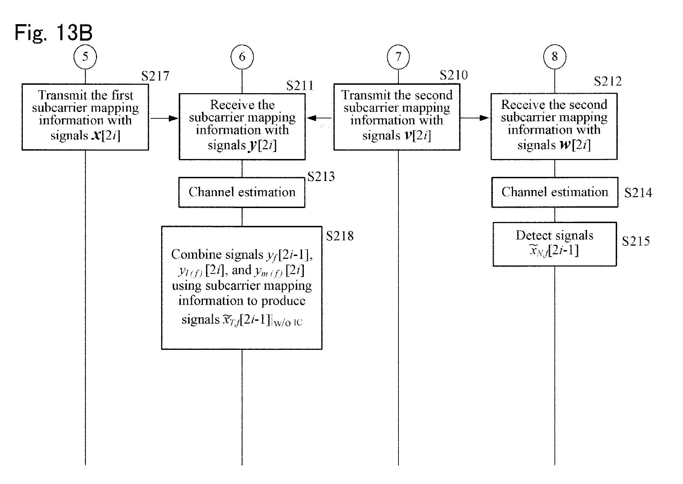

Operations of the radio communication method in which radio resources are allocated in accordance with the second embodiment will be described with reference to the flowchart shown in Figs. 13A and 13B. In this method, the mobile station $MS_T$ does not cancel interference. The same steps as in the first embodiment will not be described in detail. More specifically, steps S201 through S215 shown in Figs. 13A and 13B of this example are the same as steps S101 through S 115 shown in Figs. 9A and 9B of the first embodiment, and therefore, they will not be described in detail.

At step S216 (in Fig. 13A) for transmission at time slot [2$i$], the base station BS executes subcarrier mapping (subcarrier allocation) for the signals $x_T[2i]$ destined for the first mobile station $MS_T$, using the information on the channel characteristics $h_{BT}$. The signals $x_T[2i]$ are the same as the signals $x_T[2i\text{-}1]$ which were transmitted at last time slot [2$i$-1]. In other words, the base station BS allocates subcarriers $l(f)$ to the signals $x_T[2i]$ to be transmitted at the current time slot [2$i$] which were the same as the signals $x_T[2i\text{-}1]$ transmitted with subcarriers $f$ at last time slot [2$i$-1].

At step S217 (in Fig, 13B), the base station BS sends the first subcarrier mapping information describing the newly allocated subcarriers with the parallel signals $x_T[2i]$. At step S211, the mobile station $MS_T$ receives this first subcarrier mapping information in addition to the second subcarrier mapping information with the signals $y[2i]$.

At step S218, the mobile station $MS_T$ uses the first subcarrier mapping information received at last time slot [2$i$-1] from the base station BS for detecting the received signals $y_f$[2$i$-1] received at last time slot [2$i$-1] from the base station BS. The mobile station $MS_T$ uses the first subcarrier mapping information received at current time slot [2$i$] from the base station BS for detecting the received signals $y_{l(f)}$[2$i$] received at current time slot [2$i$] from the base station BS. The mobile station $MS_T$ uses the second subcarrier mapping information received at current time slot [2$i$] from the radio relay station RS for detecting the received signals $y_{m(f)}$[2$i$] received at current time slot [2$i$] from the radio relay station RS. The mobile station $MS_T$ combines the received signals $y_f$[2$i$-1], $y_{l(f)}$[2$i$], and $y_{m(f)}$[2$i$] to produce each of the desired signals $\tilde{x}_{T,f}$[2$i$-1]| $_{w/o\ IC}$ destined for the mobile station $MS_T$.

EXAMPLE OF SECOND EMBODIMENT (MOBILE STATION WITH INTERFERENCE CANCELLATION)

In the second embodiment in which the base station BS and the radio relay station RS simultaneously transmits signals, if the first mobile station $MS_T$ is of a type having a signal detector 33 shown in Fig. 10, the signal detector 33 cancels interference and combines the interference-cancelled received signals destined for this mobile station by MRC (maximal ratio combining).

For canceling interference, the mobile station $MS_T$ generates replica signals from the signals **y**[2$i$-1] stored at last time slot [2$i$-1] in the memory 3321 on the basis of the subcarrier mapping information. The mobile station $MS_T$ cancels interference using the replica signals.

The interference-cancelled signals $\hat{\mathbf{Y}}_f^{\{2\}}$ received at the mobile station $MS_T$ at the two consecutive time slots can be expressed by Equation (14).

$$\hat{\mathbf{Y}}_f^{\{2\}} = \begin{bmatrix} y_f[2i-1] \\ \hat{y}_{l(f)}[2i] \\ \hat{y}_{m(f)}[2i] \end{bmatrix} = \mathbf{Y}_f^{\{2\}} - \begin{bmatrix} 0 \\ h_{RT,l(f)}[2i]\hat{x}_{m^{-1}(l(f))}[2i-1] \\ h_{BT,m(f)}[2i]\hat{x}_{l^{-1}(m(f))}[2i-1] \end{bmatrix}$$

$$\ldots (14)$$

$$\hat{x}_f[2i-1] = \left(h_{BT,f}[2i-1]\right)^{-1} y_f[2i-1] \quad \ldots (15)$$

The second term of the right side member in Equation (14) represents the replica signals generated for canceling interference.

For example, with reference to Fig. 12, the signal destined for the mobile station $MS_T$ and modulated by the secondary lowest frequency subcarrier (#2) at time slot [2$i$-1] at the base station BS corresponds to the signal destined for the mobile station $MS_T$ and modulated by the third lowest frequency subcarrier (#3) at time slot [2$i$] at the base station BS ($f$ = 2 and $l$(2) =3).

However, the signal destined for the mobile station $MS_T$ and modulated by the third lowest frequency subcarrier (#3) received at time slot [2$i$] from the base station BS is interfered with an undesired signal modulated by the same subcarrier received from the radio relay station RS. By comparing the first subcarrier mapping information at time slot [2$i$-1] and the second subcarrier mapping information at time slot [2$i$], it is possible to understand which signal received at time slot [2$i$-1] from the base station BS corresponds to the undesired signal modulated by the third lowest frequency subcarrier (#3) received at time slot [2$i$] from the radio relay station RS. For example, let us assume that the signal modulated by the sixth lowest frequency subcarrier (#6) and received at time slot [2$i$-1] from the base station BS corresponds to the undesired signal modulated by the third lowest frequency subcarrier (#3) received at time slot [2$i$] from the radio relay station RS ($m$(6) = 3, in other words, $m^{-1}$ (3) = 6).

In this situation, the mobile station $MS_T$ obtains from the memory 3321 the undesired signal modulated by the sixth lowest frequency subcarrier (#6) and received at time slot [2$i$-1] from the base station BS. The mobile station $MS_T$ generates a replica signal from the undesired signal, and cancels the interference component of the desired signal received from the base station BS at time slot [2$i$] by the replica signal.

In accordance with Equations (14) and (15), the interference-cancelled signals $\hat{\mathbf{Y}}_f^{\{2\}}$ received at the mobile station $MS_T$ at the two consecutive time slots can be expressed by Equation (16).

$$\hat{\mathbf{Y}}_f^{\{2\}} = \begin{bmatrix} h_{BT,f}[2i-1] \\ h_{BT,l(f)}[2i] \\ h_{RT,m(f)}[2i] \end{bmatrix} x_f[2i-1]$$

$$+ \begin{bmatrix} n_{T,f}[2i-1] \\ h_{RT,l(f)}[2i]\left(h_{BR,m^{-1}(l(f))}[2i-1]\right)^{-1} n_{R,m^{-1}(l(f))}[2i-1] + n_{T,l(f)}[2i] - h_{RT,l(f)}[2i]\left(h_{BT,m^{-1}(l(f))}[2i-1]\right)^{-1} n_{T,m^{-1}(l(f))}[2i-1] \\ h_{RT,m(f)}[2i]\left(h_{BR,f}[2i-1]\right)^{-1} n_{R,f}[2i-1] + n_{T,m(f)}[2i] - h_{BT,m(f)}[2i]\left(h_{BT,l^{-1}(m(f))}[2i-1]\right)^{-1} n_{T,l^{-1}(m(f))}[2i-1] \end{bmatrix}$$

$$... (16)$$

The produced desired signal $\tilde{x}_{T,f}[2i\text{-}1]|_{w/\,IC}$ resulting from combining the interference-cancelled signals by MRC (maximal ratio combining) at the mobile station $MS_T$ can be expressed by Equation (17).

$$\tilde{x}_{T,f}[2i-1]\Big|_{w/\,IC} = \frac{\begin{bmatrix} h_{BT,f}[2i-1] \\ h_{BT,l(f)}[2i] \\ h_{RT,m(f)}[2i] \end{bmatrix}^H \cdot \hat{\mathbf{Y}}_f^{\{2\}}}{\left\| \begin{bmatrix} h_{BT,f}[2i-1] \\ h_{BT,l(f)}[2i] \\ h_{RT,m(f)}[2i] \end{bmatrix} \right\|}$$

$$... (17)$$

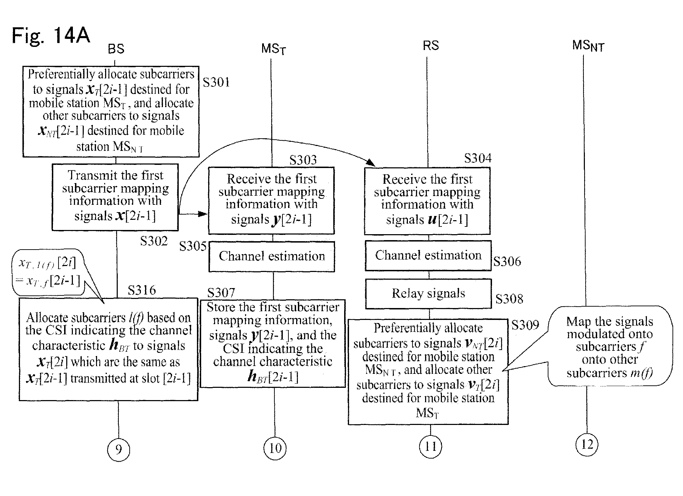

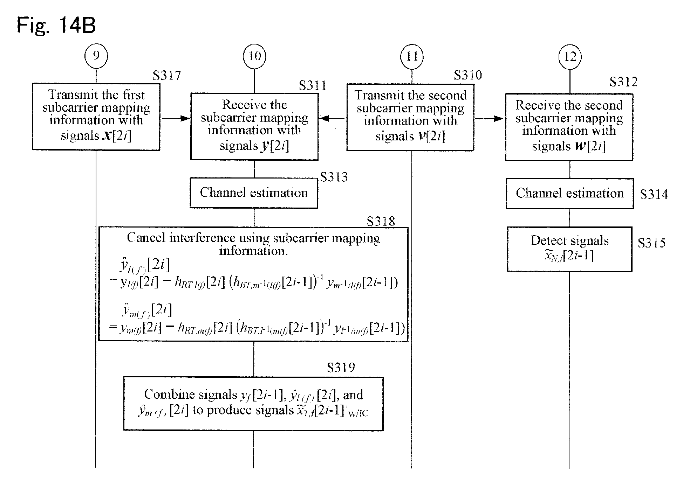

Operations of the radio communication method in which radio resources are allocated in accordance with the second embodiment will be described with reference to the flowchart shown in Figs. 14A and 14B. In this method, the mobile station $MS_T$ cancels interference. The same steps as in Figs. 13A and 13B will not be described in detail. More specifically, steps S301 through S317 shown in Figs. 14A and 14B of this example are the same as steps S201 through S217 shown in Figs. 13A and 13B of the above-described example, and therefore, they will not be described in detail.

At step S318 (in Fig. 14B), the above-described interference cancellation is conducted at the mobile station $MS_T$. More specifically, the mobile station $MS_T$ generates replica signals from the signals $y$ [2i-1] received at the last time slot and stored in the memory 3321 on the basis of the subcarrier mapping information describing subcarriers $l(f)$ and $m(f)$, and cancels the interference from the desired signals by the replica signals.

At step S319, the mobile station $MS_T$, using the subcarrier mapping information 301 describing the subcarriers $l(f)$ and $m(f)$, combines the interference-cancelled signals $\hat{y}_{l(f)}[2i]$ and $\hat{y}_{m(f)}[2i]$ resulting from the signals received at current time slot [2i] and the received signal $y_f[2i\text{-}1]$ received at last time slot [2i-1] to produce each of the desired signals $\tilde{x}_{T,f}[2i\text{-}1]|_{w/\,IC}$ destined for the mobile station $MS_T$.

THIRD EMBODIMENT

A third embodiment of the present invention will be described below. The third embodiment is a modification of the second embodiment. In the following description, differences between the second and third embodiments will be elaborated.

In the second embodiment, on the basis of the CSI 101 related to the channel characteristic $h_{BT}$, the base station BS reallocates subcarriers $l(f)$ to signals transmitted to the mobile station $MS_T$ at time slot [2i-1] that were

modulated onto subcarriers *f*, and resends the signals modulated onto the subcarriers *l(f)* at time slot [2*i*] at which the radio relay station RS sends the signals. In the third embodiment, for signals that were modulated onto subcarriers *f* at time slot [2*i*-1], the base station BS and the radio relay station RS allocate the common subcarriers to the same signals for transmission at time slot [2i]. That is to say, for the signals $x_f[2i-1]$ which were modulated onto the subcarriers *f* at the base station BS at time slot [2*i*-1], the subcarrier mapper 12 of the base station BS allocates subcarrier *m(f)* which are used by the radio relay station RS at time slot [2*i*] for the same signals, using the second subcarrier mapping information produced at the radio relay station RS. For transmitting the second subcarrier mapping information from the radio relay station RS to the base station BS, a time gap is provided in time slot [2*i*], the time gap being between a reception time at the radio relay station RS from the base station BS and a transmission time at the radio relay station RS to mobile stations. By virtue of the use of common subcarriers for the same signals at the base station BS and the radio relay station RS at the same time, the received signals received at the mobile station $MS_T$ do not include interference components.

Radio communication from the base station BS to the second mobile station $MS_{N\,T}$ via the radio relay station RS in the third embodiment is the same as that in the first embodiment, and therefore, this will not be described in detail.

EXAMPLE OF THIRD EMBODIMENT

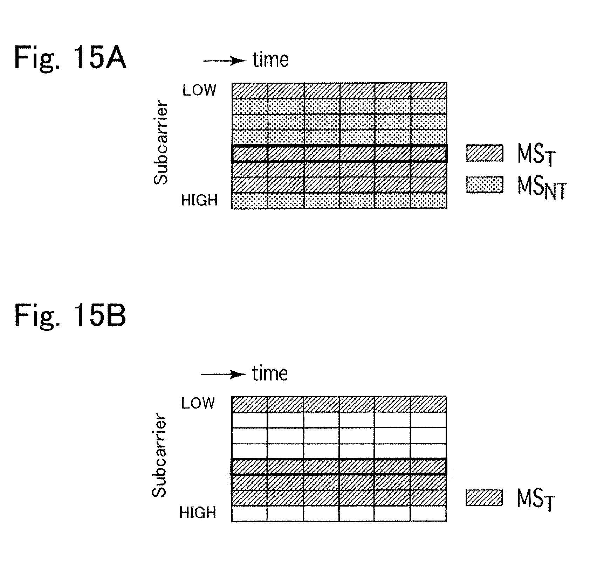

Next, with reference to Figs. 15A through 17B, an example of a radio communication method in which radio resources are allocated in accordance with the third embodiment will be described. This method is carried out in a radio relay system using OFDMA as the multicarrier communication scheme. In the example of the third embodiment, the subcarrier allocation (radio resource allocation) at the base station BS for radio transmission at time slot [2*i*-1] is the same as that at the base station BS for radio transmission at time slot [2*i*-1] in the above-described examples of the first and second embodiments, and therefore, this will not be described in detail.

Subcarrier allocation to signals *x*[2*i*] at the base station BS at time slot [2*i*] will be described with reference to Figs. 15A and 15B. Fig. 15A shows the subcarrier allocation at time slot [2*i*] at the radio relay station RS. In the embodiment, the base station BS allocates the subcarriers that are allocated to signals destined for the mobile station $MS_T$ by the radio relay station RS to the same signals destined for the mobile station $MS_T$. The subcarrier allocation for the mobile station $MS_T$ at time slot [2*i*] at the base station BS is shown in Fig. 15B. Thus, for previously transmitted signals $x_f[2i-1]$ which were modulated onto the subcarriers *f* at the base station BS at time slot [2*i*-1], the base station BS allocates subcarriers *m(f)* at time slot [2*i*]. Therefore, $x_{m(f)}[2i] = x_f[2i-1]$. The subcarrier mapping (subcarrier allocation) at the radio relay station RS is executed in a manner similar to that in the example of the first embodiment.

Let us assume that signals mapped on the subcarriers *m(f)* at the base station BS at time slot [2*i*] are expressed as $x_{m(f)}[2i]$ and signals mapped on the subcarriers *m(f)* at the radio relay station RS at time slot [2*i*] are expressed as $v_{m(f)}[2i]$. Received signals $y_{m(f)}[2i]$ received with a subcarrier *m(f)* at time slot [2*i*] from the base station BS and the radio relay station RS at the mobile station $MS_T$ can be expressed by Equation (18).

$$y_{m(f)}[2i] = h_{BT,m(f)}[2i]x_{m(f)}[2i] + h_{RT,m(f)}[2i]v_{m(f)}[2i] + n_{T,m(f)}[2i]$$
$$= h_{BT,m(f)}[2i]x_f[2i-1] + h_{RT,m(f)}[2i]x_f[2i-1]$$
$$+ h_{RT,m(f)}[2i]\left(h_{BR,f}[2i-1]\right)^{-1}n_{R,f}[2i-1] + n_{T,m(f)}[2i]$$

$$\ldots (18)$$

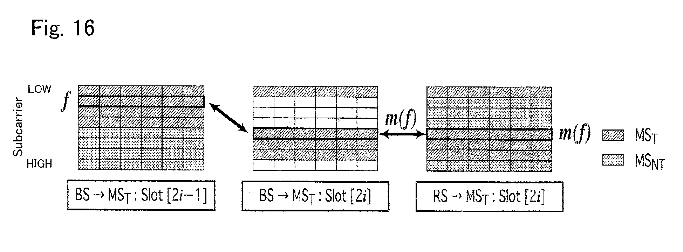

The mobile station $MS_T$, using the subcarrier mapping information 301 describing the subcarriers *m(f)*, detects the received signals $y_{m(f)}[2i]$ received at the current time slot (time slot [2*i*]) and the received signals $y_f[2i-1]$ received at the last time slot (time slot [2*i*-1]) shown in Fig. 16, and combines these received signals.

The signals $Y_f^{\{3\}}$ received at the mobile station $MS_T$ at the two consecutive time slots can be expressed by Equation (19).

$$\mathbf{Y}_f^{\{3\}} = \begin{bmatrix} y_f[2i-1] \\ y_{m(f)}[2i] \end{bmatrix}$$

$$= \begin{bmatrix} h_{BT,f}[2i-1] \\ h_{BT,m(f)}[2i] + h_{RT,m(f)}[2i] \end{bmatrix} x_f[2i-1]$$

$$+ \begin{bmatrix} n_{T,f}[2i-1] \\ h_{RT,m(f)}[2i](h_{BR,f}[2i-1])^{-1} n_{R,f}[2i-1] + n_{T,m(f)}[2i] \end{bmatrix}$$

$$... (19)$$

The produced desired signal $\tilde{x}_{T,f}[2i-1]$ resulting from combining the signals by MRC (maximal ratio combining) at the mobile station $MS_T$ can be expressed by Equation (20).

$$\tilde{x}_{T,f}[2i-1] = \frac{\begin{bmatrix} h_{BT,f}[2i-1] \\ h_{BT,m(f)}[2i] + h_{RT,m(f)}[2i] \end{bmatrix}^{H} \cdot \mathbf{Y}_f^{\{3\}}}{\left\| \begin{bmatrix} h_{BT,f}[2i-1] \\ h_{BT,m(f)}[2i] + h_{RT,m(f)}[2i] \end{bmatrix} \right\|}$$

$$... (20)$$

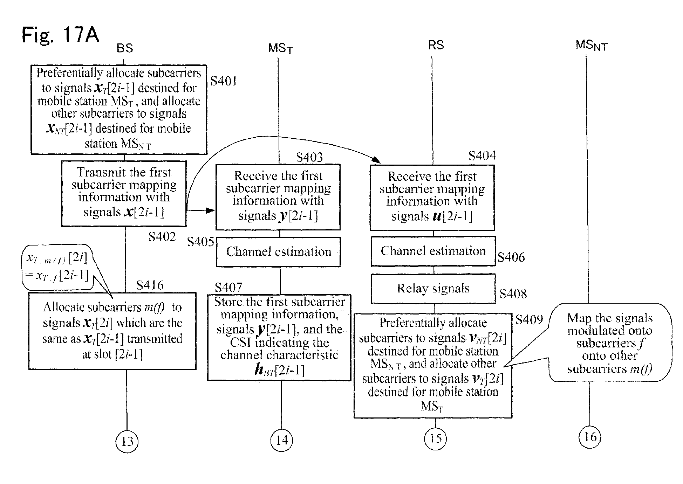

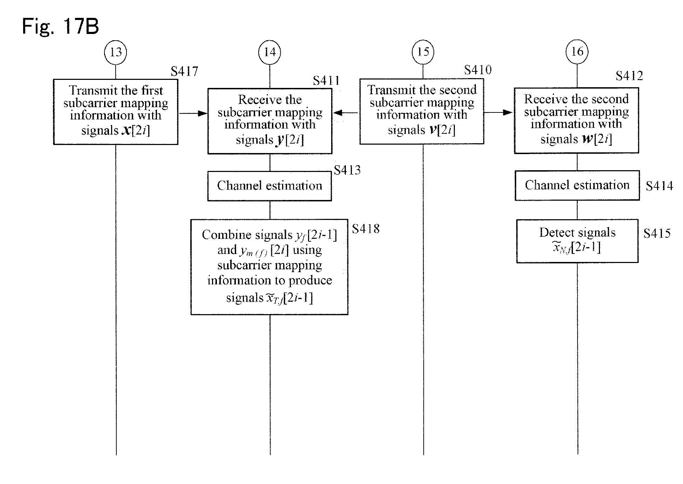

Operations of the radio communication method in which radio resources are allocated in accordance with the third embodiment will be described with reference to the flowchart shown in Figs. 17A and 17B. In this method, because of the use of common subcarriers for the same signals at the base station BS and the radio relay station RS at the same time, the received signals received at the mobile station $MS_T$ do not include interference components. The same steps as in Figs. 13A and 13B will not be described in detail. More specifically, steps S401 through S415 shown in Figs. 17A and 17B of this example are the same as steps S201 through S215 shown in Figs. 13A and 13B of the above-described example, and therefore, they will not be described in detail.

At step S416 (in Fig. 17A), in conformity with subcarriers $m(f)$ allocated to signals to be transmitted to the mobile station $MS_T$ at the radio relay station RS at time slot [2i], the base station BS allocates subcarriers $m(f)$ to signals $x_T[2i]$ destined for the mobile station $MS_T$ which are the same as $x_T[2i-1]$ transmitted with subcarriers $f$ at last time slot [2i-1].

At step S417 (in Fig, 17B), the base station BS sends the first subcarrier mapping information describing the newly allocated subcarriers with the parallel signals $x_T[2i]$. At step S411, the mobile station $MS_T$ receives this first subcarrier mapping information in addition to the second subcarrier mapping information with the signals $y[2i]$.

At step S418, the mobile station $MS_T$ uses the first subcarrier mapping information received at last time slot [2i-1] from the base station BS for detecting the received signals $y_f[2i-1]$ received at last time slot [2i-1] from the base station BS. The mobile station $MS_T$ uses the first and second subcarrier mapping information describing subcarriers $m(f)$ received at current time slot [2i] for detecting the received signals $y_{m(f)}[2i]$ received at current time slot [2i] from the base station BS and the radio relay station RS. The mobile station $MS_T$ combines the received signals $y_f[2i-1]$ and $y_{m(f)}[2i]$ to produce each of the desired signals $\tilde{x}_{T,f}[2i-1]$ destined for the mobile station $MS_T$.

FOURTH EMBODIMENT

A fourth embodiment of the present invention will be described below. In the following description, differences between the first and fourth embodiments will be elaborated.

More specifically, in the first embodiment, it is assumed that the channel characteristic $h_{BR}$ for the radio link 50 between the base station BS and the radio relay station RS is affected by frequency flat fading. The fourth embodiment is advantageous in another situation in which the channel characteristic $h_{BR}$ for the radio link 50 may be affected by frequency selective fading. When the radio link 50 is affected by frequency selective fading, if the base station BS gives higher priority to signals $x_T[2i\text{-}1]$ destined for the first mobile station $MS_T$ in connection with subcarrier mapping, the quality of signals $x_{N\,T}[2i\text{-}1]$ destined for the second mobile station $MS_{N\,T}$ may be deteriorated. This may result in reduction of the coverage area. The base station BS according to the fourth embodiment alters the order of priority for the mobile station $MS_T$ and the mobile station $MS_{NT}$ in connection with subcarrier allocation, on the basis of the receiving status at the first mobile station $MS_T$.

EXAMPLE OF FOURTH EMBODIMENT

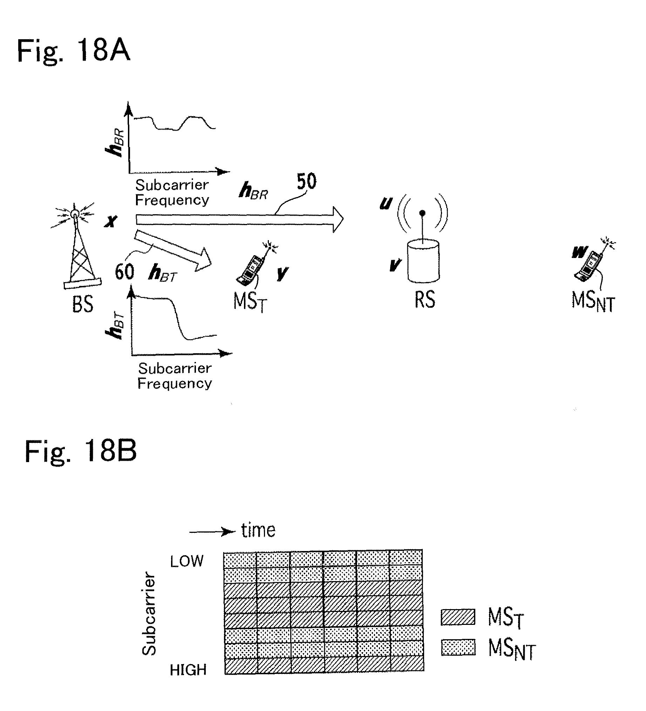

Next, with reference to Figs. 18A through 19, an example of a radio communication method in which radio resources are allocated in accordance with the fourth embodiment will be described. This method is carried out in a radio relay system using OFDMA as the multicarrier communication scheme. This method is advantageous in a situation in which the channel characteristic $h_{BR}$ for the radio link 50 between the base station BS and the radio relay station RS may be affected by frequency selective fading.

The fourth embodiment is a modification of subcarrier allocation (radio resource allocation) at the base station BS for radio transmission at time slot $[2i\text{-}1]$. On the other hand, the subcarrier allocation (radio resource allocation) at the base station BS and/or the radio relay station RS for radio transmission at time slot $[2i]$ can be the same as that in any one of the above-described examples of the first through third embodiments, and therefore, this will not be described in detail.

Let us assume that the channel characteristic $h_{BR}$ for the radio link 50 between the base station BS and the radio relay station RS is affected by frequency selective fading as shown in Fig. 18A. If the BS-RS radio link 50 is affected by frequency selective fading, the base station BS should give higher priority to signals $x_{N\,T}[2i\text{-}1]$ destined for the second mobile station $MS_{N\,T}$ than signals $x_T[2i\text{-}1]$ destined for the first mobile station $MS_T$ in connection with subcarrier mapping in order to enhance the coverage area. This is because the second mobile station $MS_{N\,T}$ cannot perform cooperative communication whereas the first mobile station $MS_T$ can perform cooperative communication.

Fig. 18B shows the subcarrier allocation at the base station BS at time slot $[2i\text{-}1]$. As will be understood from Figs. 18A and 18B, the best subcarriers among the radio link 50 are allocated for signals destined for the second mobile station $MS_{N\,T}$, and thereafter the remaining best subcarriers among the radio link 60 are allocated for signals destined for the first mobile station $MS_T$. However, since the BS-$MS_T$ radio link 60 is also affected by frequency selective fading, the remaining best subcarriers among the radio link 60 may not provide sufficient communication quality for the mobile station $MS_T$. For example, the highest frequency subcarrier in Fig. 18B, which is allocated for the $MS_T$, may not provide sufficient communication quality for the mobile station $MS_T$ according to the channel characteristic $h_{BT}$ shown in Fig. 18A. If higher priority is given to the second mobile station $MS_{N\,T}$, there is likelihood that the first mobile station $MS_T$ may cannot receive signals successfully even if the first mobile station $MS_T$ perform cooperative communication. Accordingly, if the signals destined for the first mobile station $MS_T$ cannot be received successfully at the first mobile station $MS_T$, the base station BS alters the order of priority for the mobile stations in connection with subcarrier allocation (i.e., the base station BS gives higher priority to signals destined for the first mobile station $MS_T$).

Therefore, the subcarrier mapper 12 of the base station BS operates in a first allocation mode (normal mode) and a second allocation mode (abnormal mode): in the first allocation mode, the first subcarrier mapper 12 gives higher priority to signals $x_{N\,T}[2i\text{-}1]$ destined for the second mobile station $MS_{N\,T}$ than signals $x_T[2i\text{-}1]$ destined for the first mobile station $MS_T$ in connection with subcarrier mapping, whereas in the second allocation mode, the first subcarrier mapper 12 gives higher priority to signals $x_T[2i\text{-}1]$ destined for the first mobile station $MS_T$ than signals $x_{N\,T}[2i\text{-}1]$ destined for the second mobile station $MS_{N\,T}$ in connection with subcarrier mapping. In the first allocation mode, once the parallel signals destined for the first mobile station $MS_T$ cannot be received successfully at the first mobile station $MS_T$ even if the first mobile station $MS_T$ perform cooperative communication, the subcarrier mapper 12 of the base station BS enters the second allocation mode. In the second allocation mode, if the number of consecutive transmissions (e.g., consecutive frames) successfully received at first mobile station $MS_T$ exceeds a threshold, the subcarrier mapper 12 of the base station BS returns to the first allocation mode.

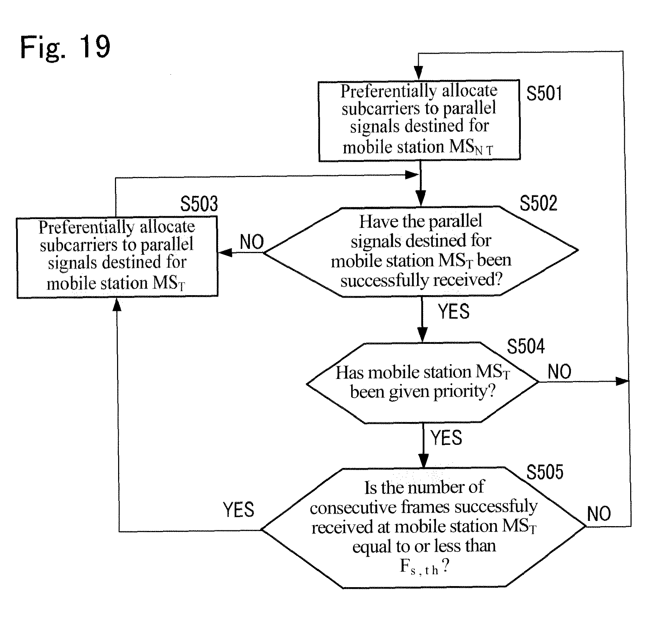

Operations of allocation of radio resources at the base station BS in accordance with the fourth embodiment will be described with reference to the flowchart shown in Fig. 19.

At step S501, the base station BS preferentially allocates subcarriers to parallel signals $x_{N\,T}[2i\text{-}1]$ destined for

the second mobile station $MS_{N\,T}$ (first allocation mode). More specifically, the subcarrier mapper 12 allocates the best subcarriers among the radio link 50 to parallel signals $\boldsymbol{x}_{N\,T}[2i\text{-}1]$ destined for the second mobile station $MS_{N\,T}$, on the basis of the CSI 101 related to the channel characteristic $\boldsymbol{h}_{BR}$ for the radio link 50. Then, the subcarrier mapper 12 allocates the remaining best subcarriers among the radio link 60 to parallel signals signals $\boldsymbol{x}_T[2i\text{-}1]$ destined for the first mobile station $MS_T$, on the basis of the CSI 101 related to the channel characteristic $\boldsymbol{h}_{BT}$ for the radio link 60.

Then, at step S502, on the basis of a report from the mobile station $MS_T$, the subcarrier mapper 12 determines as to whether or not the transmitted parallel signals (e.g., corresponding to a single frame) destined for the first mobile station $MS_T$, have been received successfully at the first mobile station $MS_T$. If the determination at step S502 is negative, the process proceeds to step S503. Otherwise, the process proceeds to step S504.

At step S503, the base station BS preferentially allocates subcarriers to parallel signals $\boldsymbol{x}_T[2i\text{-}1]$ destined for the first mobile station $MS_T$ (second allocation mode). More specifically, the subcarrier mapper 12 allocates the best subcarriers among the radio link 60 to parallel signals $\boldsymbol{x}_T[2i\text{-}1]$ destined for the first mobile station $MS_T$, on the basis of the CSI 101 related to the channel characteristic $\boldsymbol{h}_{BT}$ for the radio link 60. Then, the subcarrier mapper 12 allocates the remaining best subcarriers among the radio link 50 to parallel signals $\boldsymbol{x}_{NT}[2i\text{-}1]$ destined for the second mobile station $MS_{N\,T}$, on the basis of the CSI 101 related to the channel characteristic $\boldsymbol{h}_{BR}$ for the radio link 50.

At step S504, the subcarrier mapper 12 determines as to whether the subcarrier mapper 12 itself is in the second allocation mode or the first allocation mode. In other words, the subcarrier mapper 12 determines as to whether the first mobile station $MS_T$ has been given higher priority. If higher priority has been given to the second mobile station $MS_{NT}$ (first allocation mode), the process returns to step S501 to continue the first allocation mode.

If it is determined at step S504 that higher priority has been given to the first mobile station $MS_T$ (second allocation mode), the process proceeds to step S505. At step S505, the subcarrier mapper 12 determines as to whether or not the number of consecutive frames successfully received at first mobile station $MS_T$ is equal to or less than a threshold $F_{s,\,th}$. If the determination at step S505 is affirmative, the process proceeds to step S503 to continue the second allocation mode, in which the first mobile station $MS_T$ is preferential in subcarrier allocation. If it is determined at step S505 that the number of consecutive frames successfully received at first mobile station $MS_T$ exceeds a threshold $F_{s,\,th}$, the process returned to step S501 to reenter the first allocation mode, in which the second mobile station $MS_{N\,T}$ is preferential in subcarrier allocation. Accordingly, in the environment in which both of the BS-RS radio link and the BS-$MS_{N\,T}$ radio link are affected by frequency selective fading, the base station BS gives higher priority to the second mobile station $MS_{N\,T}$ for a longer time in subcarrier allocation since reception at the second mobile station $MS_{N\,T}$ depends on only the radio relay station RS whereas the first mobile station $MS_T$ can combine received signals from the base station BS and the radio relay station RS.


MODIFICATIONS


While preferred embodiments of the present invention have been described in detail, it is not intended that the invention be limited to the specific details above. Rather, it will be appreciated by those skilled in the art that various modifications or variations to those details could be developed in light of the overall teaching of the disclosure.

In the above-described embodiments, OFDMA is used as an example of multicarrier communication schemes. However, it is not intended that the invention be limited to this. More specifically, the present invention can be applied to SC-FDMA (Single Carrier - Frequency Division Multiple Access) in which a plurality of subcarrier blocks are used.

In the above-described embodiments, half-duplex relay is executed in which reception and transmission at the relay station RS are conducted at different time slots. However, it is not intended that the invention be limited to this. More specifically, the radio relay station RS may simultaneously make transmission and reception using different antennas. In this case, it is preferable that the radio relay station RS have at least two antennas in order to transmit and receive signals simultaneously.

In the above-described embodiments, the radio relay station RS conducts non-regenerative relaying (relaying without subcarrier demodulation and subcarrier modulation), using ZF (Zero Forcing). However, it is not intended that the invention be limited to this. More specifically, the radio relay station RS may use AF (amplify-and-forward) relaying (relaying with power amplification but without subcarrier demodulation and subcarrier modulation). Alternatively, the radio relay station RS may use DF (decode-and-forward) relaying, in which received signals are decided and thereafter re-modulated onto subcarriers for transmission.

In the above-described embodiments, the first mobile station $MS_T$ uses MRC (maximal ratio combining) for combining received signals to produce the desired signal. However, it is not intended that the invention be limited to this. For example, ML (maximum likelihood) combining may be used for producing the desired signal.

In the above-described embodiments, each mobile station includes a single antenna. However, it is not intended that the invention be limited to this. More specifically, each mobile station may include a plurality of antennas.

In the above-described embodiments, the first mobile station $MS_T$ receives signals destined for the mobile station $MS_T$ and modulated by different or common subcarriers from the base station BS and radio relay station RS, and combines them to produce the desired signal. It is not intended that the invention be limited to this. More specifically, the base station BS and the radio relay station RS may process a signal destined for the mobile station $MS_T$ by means of, e.g., STBC (space time block coding), and transmit the different signals onto different subcarriers. In this case, the mobile station $MS_T$ receives the different signals destined for the mobile station $MS_T$ and modulated onto different subcarriers from the base station BS and radio relay station RS, and combines them to produce the desired signal.

In the above-described embodiments, the communication system includes a single first mobile station $MS_T$ and a single second mobile station $MS_{NT}$ for the sake of convenience of description. It is not intended that the invention be limited to this. Rather, the present invention may be applied into a system in which a large number of first and second mobile stations.

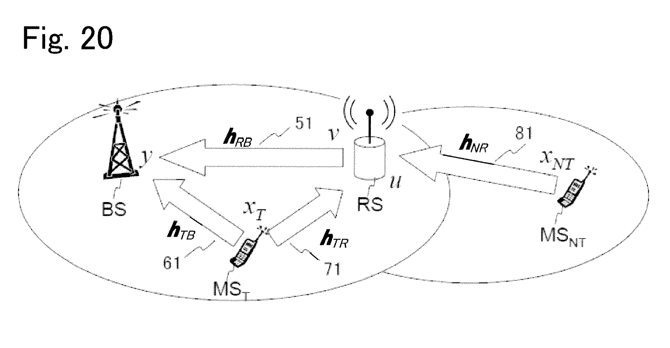

In the above-described embodiments, the system operates in a downlink communication. However, it is not intended that the invention be limited to this. More specifically, the system may operate in an uplink communication. Fig. 20 is a view showing the overall structure of a multicarrier radio communication system (radio relay system), especially showing parts of the radio relay system which pertains to the present invention. In this modification, the present invention is applied to uplink communications. The mobile station $MS_T$ and the mobile station $MS_{NT}$ tranmit the signals destined for the base station BS. In this system, the radio relay station RS and the base station BS are connected via a radio link 51 having a channel characteristic $\boldsymbol{h}_{RB}$. The mobile station $MS_T$ and the base station BS are connected via a radio link 61 having a channel characteristic $\boldsymbol{h}_{TB}$. The mobile station $MS_T$ and the radio relay station RS are connected via a radio link 71 having a channel characteristic $\boldsymbol{h}_{TR}$. The mobile station $MS_{NT}$ and the radio relay station RS are connected via a radio link 81 having a channel characteristic $\boldsymbol{h}_{NR}$.

At time slot [2$i$-1], the mobile station $MS_T$ and the mobile station $MS_{NT}$ simultaneously tranmit the signals $\boldsymbol{x}_T$[2$i$-1] and the signals $\boldsymbol{x}_{NT}$[2$i$-1], respectively, the signals $\boldsymbol{x}_T$[2$i$-1] and the signals $\boldsymbol{x}_{NT}$[2$i$-1] being modulated onto different subcarriers according to the subcarrier mapping in connection with the subcarrier allocation at the relay station RS determining an order of priority for originated mobile stations on the basis of whether the individual mobile station is the first mobile station $MS_T$ or the second mobile station $MS_{NT}$. The base station BS receives the signals $\boldsymbol{y}$[2$i$-1] which include signals corresponding to the signals $\boldsymbol{x}_T$[2$i$-1] originated from the first mobile station $MS_T$, and the relay station RS receives the signals $\boldsymbol{u}$[2$i$-1] which include signals $\boldsymbol{u}_T$[2$i$-1] corresponding to the signals $\boldsymbol{x}_T$[2$i$-1] originated from the first mobile station $MS_T$ and signals $\boldsymbol{u}_{NT}$[2$i$-1] corresponding to the signals $\boldsymbol{x}_{NT}$[2$i$-1] originated from the second mobile station $MS_{NT}$.

At time slot [2$i$], the relay station RS then forwards the signals $\boldsymbol{v}$[2$i$] which include signals $\boldsymbol{v}_T$[2$i$] corresponding to the signals $\boldsymbol{x}_T$[2$i$-1] originated from the first mobile station $MS_T$ and signals $\boldsymbol{v}_{NT}$[2$i$] corresponding to the signals $\boldsymbol{x}_{NT}$[2$i$-1] originated from the second mobile station $MS_{NT}$, the signals $\boldsymbol{v}_T$[2$i$] and the signals $\boldsymbol{v}_{NT}$[2$i$] being modulated onto different subcarriers according to the subcarrier mapping in connection with the subcarrier allocation at the base station BS determining an order of priority for originated mobile stations on the basis of whether the individual mobile station is the first mobile station $MS_T$ or the second mobile station $MS_{NT}$.

The base station BS receives the signals $\boldsymbol{y}$[2$i$] which include signals $\boldsymbol{y}_T$[2$i$] corresponding to the signals $\boldsymbol{x}_T$[2$i$-1] originated from the first mobile station $MS_T$ and signals $\boldsymbol{y}_{NT}$[2$i$] corresponding to the signals $\boldsymbol{x}_{NT}$[2$i$-1] originated from the second mobile station $MS_{NT}$. With the use of the subcarrier mapping information, the base station BS combines the signals $\boldsymbol{y}$[2$i$-1] received directly from the first mobile station $MS_T$ and the signals $\boldsymbol{y}_T$[2$i$] received from the relay station RS for obtaining cooperative diversity gain even if the first mobile station $MS_T$ and the relay station RS use different subcarrier sets for transmitting signals originated from the first mobile station $MS_T$ and destined for the base station BS. The base station BS also detects the signals originated from the second mobile station $MS_{NT}$ and destined for the base station BS.

Furthermore, at time slot [2$i$], the mobile station $MS_T$ may transmit the signals $\boldsymbol{x}_T$[2$i$] of which the contents are the same as in the $\boldsymbol{x}_T$[2$i$-1] previously transmitted, and simultaneously, the relay station RS transmits the signals $\boldsymbol{v}$[2$i$] which also include signals $\boldsymbol{v}_T$[2$i$] corresponding to the signals $\boldsymbol{x}_T$[2$i$-1] originated from the mobile station $MS_T$. The base station BS combines the signals $\boldsymbol{y}$[2$i$-1] received directly from the first mobile station $MS_T$ and the signals $\boldsymbol{y}_T$[2$i$] received from the first mobile station $MS_T$ and the relay station RS for obtaining cooperative diversity gain even if the first mobile station $MS_T$ and the relay station RS use different subcarrier sets for transmitting signals originated from the first mobile station $MS_T$ and destined for the base station BS.

## Claims

1. A multicarrier radio communication system comprising a base station, a radio relay station having a radio relay function, a first mobile station located at a position where it is possible to directly communicate with the base station and to communicate with the radio relay station, and a second mobile station located at a position where it is impossible to directly communicate with the base station and it is possible to communicate with the radio relay station, the base station comprising:

first subcarrier mapping means for allocating subcarriers to a plurality of signals destined for mobile stations on the basis of destinations of the signals, and for generating first subcarrier mapping information indicating allocation of subcarriers to signals at the first subcarrier mapping means, the first subcarrier mapping means determining an order of priority for signals destined for mobile stations in connection with the allocation of subcarriers on the basis of whether each mobile station is the first mobile station or the second mobile station; first subcarrier modulating means for modulating the signals onto the subcarriers in accordance with the allocation of subcarriers made at the first subcarrier mapping means; means for transmitting the signals modulated at the first subcarrier modulating means to the first mobile station and the radio relay station; and means for reporting the first subcarrier mapping information to the first mobile station and the radio relay station; the radio relay station comprising:

means for receiving the signals transmitted from the base station; means for recognizing destinations of the received signals on the basis of the first subcarrier mapping information reported from the base station; second subcarrier mapping means for allocating subcarriers to the received signals destined for the mobile stations on the basis of the destinations of the signals, independently of the allocation of subcarriers made at the first subcarrier mapping means, and for generating second subcarrier mapping information indicating allocation of subcarriers to signals at the second subcarrier mapping means, the second subcarrier mapping means determining an order of priority for signals destined for mobile stations in connection with the allocation of subcarriers at the second subcarrier mapping means on the basis of whether each mobile station is the first mobile station or the second mobile station; means for transmitting the signals modulated onto subcarriers allocated at the second subcarrier mapping means to the first mobile station and the second mobile station; and means for reporting the second subcarrier mapping information to the first mobile station and the second mobile station;

the first mobile station comprising:

means for receiving the first subcarrier mapping information from the base station; means for receiving the second subcarrier mapping information from the radio relay station; means for receiving the signals from the base station and the radio relay station; and means for combining signals destined for the first mobile station among the received signals using the first subcarrier mapping information and the second subcarrier mapping information, thereby producing desired signals destined for the first mobile station;

the second mobile station comprising:

means for receiving the second subcarrier mapping information from the radio relay station; means for receiving the signals from the radio relay station; and means for detecting desired signals destined for the second mobile station among the received signals using the second subcarrier mapping information.

2. The multicarrier radio communication system according to claim 1, wherein the base station further comprising means for retransmitting signals previously transmitted destined for the first mobile station, wherein the means for transmitting at the radio relay station transmits the signals modulated onto subcarriers allocated at the second subcarrier mapping means to the first mobile station and the second mobile station simultaneously with retransmission of the signals destined for the first mobile station from the base station, the signals transmitted from the radio relay station being originated from signals previously transmitted from the base station, wherein the first subcarrier mapping means allocates subcarriers to the signals retransmitted from the base station, independently of subcarriers allocated to the signals previously transmitted from the base station, wherein the means for receiving the signals in the first mobile station receives the signals previously transmitted from the base station, and thereafter receives the signals retransmitted from the base station simultaneously with the signals that are transmitted from the radio relay station and are originated from the signals previously transmitted from the base station, and wherein the first mobile station further comprising:

means for multicarrier-demodulating the signals received from the base station and the radio relay station; and

a memory for storing the multicarrier-demodulated signals, the stored multicarrier-demodulated signals corresponding to signals received from the base station in past,

wherein, with the use of the first subcarrier mapping information and the second subcarrier mapping information, the means for combining signals in the first mobile station combines multicarrier-demodulated signals destined for the first mobile station and stored in the memory and multicarrier-demodulated signals destined for the first mobile station and currently supplied from the means for multicarrier-demodulating, the multicarrier-demodulated signals currently supplied corresponding to signals received from both of the base station and the radio relay station simultaneously.

3. The multicarrier radio communication system according to claim 1 or 2, wherein the first mobile station further comprising means for canceling interference affecting the multicarrier-demodulated signals destined for the first mobile station and currently supplied from the means for multicarrier-demodulating, wherein the means for combining signals combines multicarrier-demodulated signals destined for the first mobile station and stored in the memory and multicarrier-demodulated signals whose interference is cancelled by the means for canceling interference.

4. The multicarrier radio communication system according to claim 3, wherein the means for canceling interference generates replica signals from multicarrier-demodulated signals being stored in the memory, being related to multicarrier-demodulated signals not destined for the first mobile station, and being modulated onto subcarriers onto which the multicarrier-demodulated signals destined for the first mobile station and currently supplied from the means for multicarrier-demodulating, and wherein the means for canceling interference cancels the interference using the replica signals.

5. The multicarrier radio communication system according to claim 2, wherein the first subcarrier mapping means in the base station allocates, to the signals retransmitted from the base station, subcarriers allocated by the radio relay station to the signals that are transmitted from the radio relay station and originated from signals previously transmitted from the base station.

6. A base station that communicates with mobile stations and a radio relay station having a radio relay function, the mobile stations including a first mobile station located at a position where it is possible to directly communicate with the base station and to communicate with the radio relay station, and a second mobile station located at a position where it is impossible to directly communicate with the base station and it is possible to communicate with the radio relay station,
the base station comprising:

first subcarrier mapping means for allocating subcarriers to a plurality of signals destined for mobile stations on the basis of destinations of the signals, and for generating first subcarrier mapping information indicating allocation of subcarriers to signals at the first subcarrier mapping means, the first subcarrier mapping means determining an order of priority for signals destined for mobile stations in connection with the allocation of subcarriers on the basis of whether each mobile station is the first mobile station or the second mobile station;
first subcarrier modulating means for modulating the signals onto the subcarriers in accordance with the allocation of subcarriers made at the first subcarrier mapping means;
means for transmitting the signals modulated at the first subcarrier modulating means to the first mobile station and the radio relay station; and
means for reporting the first subcarrier mapping information to the first mobile station and the radio relay station.

7. The base station according to claim 6, further comprising means for determining whether or not each mobile station is the first mobile station or the second mobile station, wherein the first subcarrier mapping means refers to the determination as to whether or not each mobile station is the first mobile station or the second mobile station for determining the order of priority.

8. The base station according to claim 6 or 7, wherein the first subcarrier mapping means preferentially allocates, to signals destined for the mobile station determined to have higher priority by the first subcarrier mapping means, best subcarriers among a radio link from the base station, the radio link corresponding to the mobile station determined to have higher priority, and thereafter the first subcarrier mapping means allocates, to signals destined for the mobile station determined to have lower priority by the first subcarrier mapping means, remaining best subcarriers among another radio link from the base station, said another radio link corresponding to the mobile station determined to have lower priority.

9. The base station according to any of claims 6 to 8, wherein the first subcarrier mapping means gives higher priority to signals destined for the first mobile station than signals destined for the second mobile station.

10. The base station according to any of claims 6 to 9, further comprising means for retransmitting signals previously transmitted destined for the first mobile station in order that signals retransmitted from the base station be received at the first mobile station simultaneously with signals that are transmitted from the radio relay station and are originated from signals previously transmitted from the base station, wherein the first subcarrier mapping means allocates subcarriers to the signals retransmitted from the base station, independently of subcarriers allocated to the signals previously transmitted from the base station.

11. The base station according to claim 10, wherein the first subcarrier mapping means allocates, to the signals retransmitted from the base station, subcarriers allocated by the radio relay station to the signals that are transmitted from the radio relay station and originated from signals previously transmitted from the base station.

12. The base station according to claim 6, wherein the first subcarrier mapping means operates in a first allocation mode and a second allocation mode, the first subcarrier mapping means giving higher priority to signals destined for the second mobile station than signals destined for the first mobile station in connection with allocation of subcarriers in the first allocation mode, the first subcarrier mapping means giving higher priority to signals destined for the first mobile station than signals destined for the second mobile station in connection with allocation of subcarriers in the second allocation mode, the first subcarrier mapping means entering the second allocation mode from the first allocation mode once the signals destined for the first mobile station cannot be received successfully at the first mobile station, the first subcarrier mapping means entering the first allocation mode from the second allocation mode if a number of consecutive transmissions successfully received at the first mobile station exceeds a threshold.

13. A radio relay station having a radio relay function and communicating with a base station and mobile stations, the mobile stations including a first mobile station located at a position where it is possible to directly communicate with the base station and to communicate with the radio relay station, and a second mobile station located at a position where it is impossible to directly communicate with the base station and it is possible to communicate with the radio relay station,
the radio relay station comprising:

   means for receiving the signals transmitted from the base station;
   means for recognizing destinations of the received signals on the basis of the first subcarrier mapping information reported from the base station;
   second subcarrier mapping means for allocating subcarriers to the received signals destined for the mobile stations on the basis of the destinations of the signals, independently of the allocation of subcarriers made at the first subcarrier mapping means, and for generating second subcarrier mapping information indicating allocation of subcarriers to signals at the second subcarrier mapping means, the second subcarrier mapping means determining an order of priority for signals destined for mobile stations in connection with the allocation of subcarriers at the second subcarrier mapping means on the basis of whether each mobile station is the first mobile station or the second mobile station;
   means for transmitting the signals modulated onto subcarriers allocated at the second subcarrier mapping means to the first mobile station and the second mobile station; and
   means for reporting the second subcarrier mapping information to the first mobile station and the second mobile station.

14. The radio relay station according to claim 13, further comprising means for determining whether or not each mobile station is the first mobile station or the second mobile station, wherein the second subcarrier mapping means refers to the determination as to whether or not each mobile station is the first mobile station or the second mobile station for determining the order of priority.

15. The radio relay station according to claim 13 or 14, wherein the second subcarrier mapping means gives higher priority to signals destined for the second mobile station than signals destined for the first mobile station.

16. The radio relay station according to claim 15, wherein the second subcarrier mapping means preferentially allocates, to signals destined for the second mobile station, best subcarriers among a radio link from the radio relay station to the second mobile station, and thereafter the second subcarrier mapping means allocates, to signals destined for the first mobile station, remaining best subcarriers among another radio link from the radio relay station to the first mobile station.

17. A mobile station that communicates with a base station allocating subcarriers to a plurality of signals destined for mobile stations and transmitting the signals modulated onto the subcarriers, and a radio relay station having a radio relay function between the base station and the mobile station, allocating subcarriers to a plurality of signals destined for mobile stations, and transmitting the signals modulated onto the subcarriers,
the mobile station comprising:

means for receiving from the base station a first subcarrier mapping information indicating allocation of subcarriers to signals at the base station;
means for receiving from the radio relay station a second subcarrier mapping information indicating allocation of subcarriers to signals at the radio relay station;
means for receiving the signals from the base station and the radio relay station; and
means for combining signals destined for the mobile station among the received signals using the first subcarrier mapping information and the second subcarrier mapping information, thereby producing desired signals destined for the mobile station.

18. The mobile station according to claim 17, further comprising:

means for multicarrier-demodulating the signals received from the base station and the radio relay station; and
a memory for storing the multicarrier-demodulated signals, the stored multicarrier-demodulated signals corresponding to signals received from the base station in past,
wherein, with the use of the first subcarrier mapping information and the second subcarrier mapping information, the means for combining signals combines multicarrier-demodulated signals destined for the mobile station and stored in the memory and multicarrier-demodulated signals destined for the mobile station and currently supplied from the means for multicarrier-demodulating, the multicarrier-demodulated signals currently supplied corresponding to signals received from the radio relay station.

19. The mobile station according to claim 17, further comprising:

means for multicarrier-demodulating the signals received from the base station and the radio relay station; and
a memory for storing the multicarrier-demodulated signals, the stored multicarrier-demodulated signals corresponding to signals received from the base station in past,
wherein, with the use of the first subcarrier mapping information and the second subcarrier mapping information, the means for combining signals combines multicarrier-demodulated signals destined for the mobile station and stored in the memory and multicarrier-demodulated signals destined for the mobile station and currently supplied from the means for multicarrier-demodulating, the multicarrier-demodulated signals currently supplied corresponding to signals received from both of the base station and the radio relay station.

20. The mobile station according to claim 19, further comprising means for canceling interference affecting the multicarrier-demodulated signals destined for the mobile station and currently supplied from the means for multicarrier-demodulating, wherein the means for combining signals combines multicarrier-demodulated signals destined for the mobile station and stored in the memory and multicarrier-demodulated signals whose interference is cancelled by the means for canceling interference.

21. The mobile station according to claim 20, wherein the means for canceling interference generates replica signals from multicarrier-demodulated signals being stored in the memory, being related to multicarrier-demodulated signals not destined for the mobile station, and being modulated onto subcarriers onto which the multicarrier-demodulated signals destined for the mobile station and currently supplied from the means for multicarrier-demodulating, and wherein the means for canceling interference cancels the interference using the replica signals.

22. A multicarrier radio communication method in a multicarrier radio communication system comprising a base station, a radio relay station having a radio relay function, a first mobile station located at a position where it is possible to directly communicate with the base station and to communicate with the radio relay station, and a second mobile station located at a position where it is impossible to directly communicate with the base station and it is possible to communicate with the radio relay station,
the base station executing the steps of:

determining an order of priority for signals destined for mobile stations in connection with allocation of subcarriers at the base station on the basis of whether each mobile station is the first mobile station or the second mobile station;

allocating subcarriers to a plurality of signals destined for mobile stations on the basis of destinations of the signals and the allocation of subcarriers at the base station;

generating first subcarrier mapping information indicating allocation of subcarriers to signals at the base station;

modulating the signals onto the subcarriers in accordance with the allocation of subcarriers made at the allocating step;

transmitting the signals modulated at modulating step to the first mobile station and the radio relay station; and reporting the first subcarrier mapping information to the first mobile station and the radio relay station;

the radio relay station executing the steps of:

receiving the signals transmitted from the base station;

recognizing destinations of the received signals on the basis of the first subcarrier mapping information reported from the base station;

determining an order of priority for signals destined for mobile stations in connection with allocation of subcarriers at the radio relay station on the basis of whether each mobile station is the first mobile station or the second mobile station;

allocating subcarriers to the received signals destined for the mobile stations on the basis of the destinations of the signals and the allocation of subcarriers at the radio relay station, independently of the allocation of subcarriers made at the base station;

generating second subcarrier mapping information indicating allocation of subcarriers to signals at the radio relay station;

transmitting the signals modulated onto subcarriers allocated at the radio relay station to the first mobile station and the second mobile station; and

reporting the second subcarrier mapping information to the first mobile station and the second mobile station;

the first mobile station executing the steps of:

receiving the first subcarrier mapping information from the base station;

receiving the second subcarrier mapping information from the radio relay station;

receiving the signals from the base station and the radio relay station; and

combining signals destined for the first mobile station among the received signals using the first subcarrier mapping information and the second subcarrier mapping information, thereby producing desired signals destined for the first mobile station;

the second mobile station executing the steps of:

receiving the second subcarrier mapping information from the radio relay station;

receiving the signals from the radio relay station; and

detecting desired signals destined for the second mobile station among the received signals using the second subcarrier mapping information.

23. A multicarrier radio communication system comprising a base station, a radio relay station having a radio relay function, a first mobile station located at a position where it is possible to directly communicate with the base station and to communicate with the radio relay station, and a second mobile station located at a position where it is impossible to directly communicate with the base station and it is possible to communicate with the radio relay station, the base station comprising:

first subcarrier mapping means for allocating subcarriers to a plurality of signals that are transmitted from the radio relay station and are originated from mobile stations on the basis of originations of the signals, and for generating first subcarrier mapping information indicating allocation of subcarriers to signals at the first subcarrier mapping means, the first subcarrier mapping means determining an order of priority for signals originated from mobile stations in connection with the allocation of subcarriers on the basis of whether each mobile station is the first mobile station or the second mobile station;

means for reporting the first subcarrier mapping information to the radio relay station, so that the radio relay station recognizes subcarriers that should be used for transmitting signals originated from the respective mobile stations to the base station; and

means for receiving signals from the radio relay station and the first mobile station,

the radio relay station comprising:

second subcarrier mapping means for allocating subcarriers to signals originated from the mobile stations on the basis of the originations of the signals, independently of the allocation of subcarriers made at the first subcarrier mapping means, and for generating second subcarrier mapping information indicating allocation of subcarriers to signals at the second subcarrier mapping means, the second subcarrier mapping means determining an order of priority for signals originated from mobile stations in connection with the allocation of subcarriers at the second subcarrier mapping means on the basis of whether each mobile station is the first mobile station or the second mobile station;
means for reporting the second subcarrier mapping information to the first mobile station and the second mobile station, so that each mobile station recognizes subcarriers that should be used for transmitting signals at the mobile station;
means for reporting the second subcarrier mapping information to the base station, so that the base station recognizes subcarriers used by respective mobile stations;
means for receiving the signals transmitted from the first and second mobile stations;
means for recognizing originations of signals received at the means for receiving on the basis of the second subcarrier mapping information made at the second subcarrier mapping means;
means for receiving the first subcarrier mapping information from the base station; and
means for transmitting the signals modulated onto subcarriers in accordance with the allocation of subcarriers indicated in the first subcarrier mapping information to the base station,

each of the first and second mobile stations comprising:

means for receiving the second subcarrier mapping information from the radio relay station;
subcarrier modulating means for modulating signals destined for the base station onto the subcarriers in accordance with the allocation of subcarriers indicated in the second subcarrier mapping information; and
means for transmitting the signals modulated at the subcarrier modulating means,

wherein the base station further comprising:

means for combining signals that are originated from the first mobile station and received from the radio relay station with signals that are originated from the first mobile station and received from the first mobile station using the first subcarrier mapping information and the second subcarrier mapping information, thereby producing signals originated from the first mobile station; and
means for detecting signals originated from the second mobile station among the signals received from the radio relay station using the second subcarrier mapping information.

24. The multicarrier radio communication system according to claim 23, wherein the first mobile station further comprising means for retransmitting signals previously transmitted destined for the base station,
wherein the means for transmitting at the radio relay station transmits the signals in accordance with the allocation of subcarriers indicated in the first subcarrier mapping information to the base station simultaneously with retransmission of the signals at the means for retransmitting of the first mobile station, the signals transmitted from the radio relay station being originated from signals previously transmitted from the first mobile station,
wherein the means for receiving signals in the base station receives the signals previously transmitted from the base station, and thereafter receives the signals retransmitted from the first mobile station simultaneously with the signals that are transmitted from the radio relay station and are originated from the signals previously transmitted from the first mobile station,
wherein the base station further comprising:

third subcarrier mapping means for allocating subcarriers to the signals retransmitted from the first mobile station, independently of subcarriers allocated to the signals previously transmitted from the first mobile station, and for generating third subcarrier mapping information indicating allocation of subcarriers to the signals retransmitted from the first mobile station;
means for reporting the third subcarrier mapping information to the first mobile station, so that the first mobile station recognizes subcarriers that should be used for retransmitting the signals;
means for multicarrier-demodulating the signals received from the first mobile station and the radio relay station;

and

a memory for storing the multicarrier-demodulated signals, the stored multicarrier-demodulated signals corresponding to signals received from the first mobile station in past,

and wherein, with the use of the first subcarrier mapping information, the second subcarrier mapping information, and the third subcarrier mapping information, the means for combining signals in the base station combines multicarrier-demodulated signals received from the first mobile station and stored in the memory and multicarrier-demodulated signals currently supplied from the means for multicarrier-demodulating, the multicarrier-demodulated signals currently supplied corresponding to signals received from both of the first mobile station and the radio relay station simultaneously.

Fig. 1

Fig. 2

BS

MS-COOPERATIVE – COMMUNICATION– ABILITY DETERMINER  15

S / P  11

SUBCARRIER MAPPER  12

SUBCARRIER MODULATOR  13

*x*

MULTICARRIER MODULATOR  14

16

FIRST SUBCARRIER MAPPING INFORMATION

C S I  101

Fig. 3

RS

MS-COOPERATIVE - COMMUNICATION- ABILITY DETERMINER $\quad 26$

27 $\quad$ 21 $\quad$ u $\quad$ 23 $\quad$ 24 $\quad$ v $\quad$ 25 $\quad$ 27

| MULTICARRIER DEMODULATOR | ··· | RELAY SECTION | ··· | SUBCARRIER MAPPER | ··· | MULTICARRIER MODULATOR |

22

CHANNEL ESTIMATOR $\quad$ CSI $\rightarrow$ BS

SECOND SUBCARRIER MAPPING INFORMATION

C S I $\quad$ 201

# Fig. 4

301
SUBCARRIER MAPPING INFORMATION

30
31 $y$
MULTICARRIER DEMODULATOR · · ·

33 $\widetilde{x}$
SIGNAL DETECTOR · · ·

34
P / S

CSI
32
CHANNEL ESTIMATOR
CSI BS & RS

# Fig. 5

33

3311
MEMORY

3312
SIGNAL COMBINER

· · ·

$y$
$\widetilde{x}$

32
CHANNEL ESTIMATOR

301
SUBCARRIER MAPPING INFORMATION

# Fig. 6A

# Fig. 6B

# Fig. 7A

# Fig. 7B

Fig. 8

## Fig. 9A

BS           MS$_T$           RS           MS$_{NT}$

Preferentially allocate subcarriers to signals $x_T[2i-1]$ destined for mobile station MS$_T$, and allocate other subcarriers to signals $x_{NT}[2i-1]$ destined for mobile station MS$_{NT}$   S101

Transmit the first subcarrier mapping information with signals $x[2i-1]$   S102

S103 — Receive the first subcarrier mapping information with signals $y[2i-1]$

S104 — Receive the first subcarrier mapping information with signals $u[2i-1]$

S105 — Channel estimation

Channel estimation — S106

Relay signals — S108

S107 — Store the first subcarrier mapping information, signals $y[2i-1]$, and the CSI indicating the channel characteristic $h_{BT}[2i-1]$

S109 — Preferentially allocate subcarriers to signals $v_{NT}[2i]$ destined for mobile station MS$_{NT}$, and allocate other subcarriers to signals $v_T[2i]$ destined for mobile station MS$_T$

Map the signals modulated onto subcarriers $f$ onto other subcarriers $m(f)$

( 1 )         ( 2 )         ( 3 )         ( 4 )

Fig. 9B

① ② ③ ④

S111

S110

Transmit the second subcarrier mapping information with signals $v[2i]$

Receive the second subcarrier mapping information with signals $y[2i]$

S112

Receive the second subcarrier mapping information with signals $w[2i]$

S113

Channel estimation

Channel estimation    S114

S116

Combine signals $y_l[2i\text{-}1]$ and $y_{m\,(f)}[2i]$ using subcarrier mapping information to produce signals $\widetilde{x}_{T,f}[2i\text{-}1]$

Detect signals $\widetilde{x}_{N,f}[2i\text{-}1]$    S115

Fig. 10

## Fig. 11A

## Fig. 11B

## Fig. 11C

Fig. 12

## Fig. 13A

BS          MS$_T$          RS          MS$_{NT}$

S201 — Preferentially allocate subcarriers to signals $x_T[2i-1]$ destined for mobile station MS$_T$, and allocate other subcarriers to signals $x_{NT}[2i-1]$ destined for mobile station MS$_{NT}$

S202 — Transmit the first subcarrier mapping information with signals $x[2i-1]$

S203 — Receive the first subcarrier mapping information with signals $y[2i-1]$

S204 — Receive the first subcarrier mapping information with signals $u[2i-1]$

S205 — Channel estimation

S206 — Channel estimation

$x_{T,\,l(f)}[2i] = x_{T,\,f}[2i-1]$

S208 — Relay signals

S216 — Allocate subcarriers $l(f)$ based on the CSI indicating the channel characteristic $h_{BT}$ to signals $x_T[2i]$ which are the same as $x_T[2i-1]$ transmitted at slot $[2i-1]$

S207 — Store the first subcarrier mapping information, signals $y[2i-1]$, and the CSI indicating the channel characteristic $h_{BT}[2i-1]$

S209 — Preferentially allocate subcarriers to signals $v_{NT}[2i]$ destined for mobile station MS$_{NT}$, and allocate other subcarriers to signals $v_l[2i]$ destined for mobile station MS$_T$

Map the signals modulated onto subcarriers $f$ onto other subcarriers $m(f)$

( 5 )          ( 6 )          ( 7 )          ( 8 )

Fig. 13B

(5)　　　　　　　(6)　　　　　　　(7)　　　　　　　(8)

S217　　　　　　　　　　　S210

S211　　　　　　　　　　　　　　　　　　S212

| | | | |
|---|---|---|---|
| Transmit the first subcarrier mapping information with signals $x[2i]$ | Receive the subcarrier mapping information with signals $y[2i]$ | Transmit the second subcarrier mapping information with signals $v[2i]$ | Receive the second subcarrier mapping information with signals $w[2i]$ |

Channel estimation ⎤S213

Channel estimation　S214

Combine signals $y_f[2i-1]$, $y_{l(f)}[2i]$, and $y_{m(f)}[2i]$ using subcarrier mapping information to produce signals $\tilde{x}_{T,f}[2i-1]|_{w/o\ IC}$　S218

Detect signals $\tilde{x}_{N,f}[2i-1]$　S215

## Fig. 14A

BS          $MS_T$          RS          $MS_{NT}$

| |
|---|
| Preferentially allocate subcarriers to signals $x_T[2i\text{-}1]$ destined for mobile station $MS_T$, and allocate other subcarriers to signals $x_{NT}[2i\text{-}1]$ destined for mobile station $MS_{N\,T}$ |

S301

| |
|---|
| Transmit the first subcarrier mapping information with signals $x[2i\text{-}1]$ |

S302

| S303 | |
|---|---|
| | Receive the first subcarrier mapping information with signals $y[2i\text{-}1]$ |

| S304 | |
|---|---|
| | Receive the first subcarrier mapping information with signals $u[2i\text{-}1]$ |

S305

| |
|---|
| Channel estimation |

| |
|---|
| Channel estimation |

S306

$x_{T,\,l(f)}[2i]$
$= x_{T,f}[2i\text{-}1]$

S316

| |
|---|
| Relay signals |

S308

| |
|---|
| Allocate subcarriers $l(f)$ based on the CSI indicating the channel characteristic $h_{BT}$ to signals $x_T[2i]$ which are the same as $x_T[2i\text{-}1]$ transmitted at slot $[2i\text{-}1]$ |

S307

| |
|---|
| Store the first subcarrier mapping information, signals $y[2i\text{-}1]$, and the CSI indicating the channel characteristic $h_{BT}[2i\text{-}1]$ |

S309

| |
|---|
| Preferentially allocate subcarriers to signals $v_{NT}[2i]$ destined for mobile station $MS_{N\,T}$, and allocate other subcarriers to signals $v_T[2i]$ destined for mobile station $MS_T$ |

Map the signals modulated onto subcarriers $f$ onto other subcarriers $m(f)$

(9)          (10)          (11)          (12)

## Fig. 14B

⑨        ⑩        ⑪        ⑫

S317

Transmit the first subcarrier mapping information with signals $x[2i]$

S311

Receive the subcarrier mapping information with signals $y[2i]$

S310

Transmit the second subcarrier mapping information with signals $v[2i]$

S312

Receive the second subcarrier mapping information with signals $w[2i]$

S313

Channel estimation

S314

Channel estimation

S315

Detect signals $\tilde{x}_{N,f}[2i\text{-}1]$

S318

Cancel interference using subcarrier mapping information.

$$\hat{y}_{l(f)}[2i] = y_{l(f)}[2i] - h_{RT,l(f)}[2i]\left(h_{BT,m\text{-}1(l(f))}[2i\text{-}1]\right)^{-1} y_{m\text{-}1(l(f))}[2i\text{-}1])$$

$$\hat{y}_{m(f)}[2i] = y_{m(f)}[2i] - h_{RT,m(f)}[2i]\left(h_{BT,l\text{-}1(m(f))}[2i\text{-}1]\right)^{-1} y_{l\text{-}1(m(f))}[2i\text{-}1])$$

S319

Combine signals $y_f[2i\text{-}1]$, $\hat{y}_{l(f)}[2i]$, and $\hat{y}_{m(f)}[2i]$ to produce signals $\tilde{x}_{T,f}[2i\text{-}1]|_{\text{w/IC}}$

Fig. 15A

Fig. 15B

Fig. 16

## Fig. 17A

BS          $MS_T$          RS          $MS_{NT}$

S401 — Preferentially allocate subcarriers to signals $x_T[2i-1]$ destined for mobile station $MS_T$, and allocate other subcarriers to signals $x_{NT}[2i-1]$ destined for mobile station $MS_{NT}$

S402 — Transmit the first subcarrier mapping information with signals $x[2i-1]$

S403 — Receive the first subcarrier mapping information with signals $y[2i-1]$

S404 — Receive the first subcarrier mapping information with signals $u[2i-1]$

S405 — Channel estimation

S406 — Channel estimation

S408 — Relay signals

$x_{T\,.\,m(f)}[2i] = x_{T\,.f}[2i-1]$

S416 — Allocate subcarriers $m(f)$ to signals $x_T[2i]$ which are the same as $x_T[2i-1]$ transmitted at slot $[2i-1]$

S407 — Store the first subcarrier mapping information, signals $y[2i-1]$, and the CSI indicating the channel characteristic $h_{BT}[2i-1]$

S409 — Preferentially allocate subcarriers to signals $v_{NT}[2i]$ destined for mobile station $MS_{NT}$, and allocate other subcarriers to signals $v_T[2i]$ destined for mobile station $MS_T$

Map the signals modulated onto subcarriers $f$ onto other subcarriers $m(f)$

(13)          (14)          (15)          (16)

Fig. 17B

⑬

Transmit the first
subcarrier mapping
information with
signals $x[2i]$

S417

⑭

Receive the
subcarrier mapping
information with
signals $y[2i]$

S411

Channel estimation

S413

Combine signals $y_f[2i\text{-}1]$
and $y_{m(f)}[2i]$ using
subcarrier mapping
information to produce
signals $\tilde{x}_{T,f}[2i\text{-}1]$

S418

⑮

Transmit the second
subcarrier mapping
information with
signals $v[2i]$

S410

⑯

Receive the second
subcarrier mapping
information with
signals $w[2i]$

S412

Channel estimation

S414

Detect signals
$\tilde{x}_{N,f}[2i\text{-}1]$

S415

Fig. 18A

Fig. 18B

# Fig. 19

Preferentially allocate subcarriers to parallel signals destined for mobile station $MS_{NT}$ — S501

Have the parallel signals destined for mobile station $MS_T$ been successfully received? — S502

NO →

Preferentially allocate subcarriers to parallel signals destined for mobile station $MS_T$ — S503

YES ↓

Has mobile station $MS_T$ been given priority? — S504

NO →

YES ↓

Is the number of consecutive frames successfuly received at mobile station $MS_T$ equal to or less than $F_{s,th}$? — S505

YES

NO

Fig. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Adaptive Resource Allocation in Cellular OFDMA System with Multiple Relay Stations. **M. KANEKO ; P. POPOVSKI.** Proc. 65th IEEE Vehicular Technology Conference. VTC Spring, April 2007

- **M. HERDIN.** A chunk based OFDM amplify-and-forward relaying scheme for 4G mobile radio systems. *Proceedings of the IEEE International Conference on Communications (ICC '06),* June 2006